# EUROPEAN PATENT APPLICATION

(11) **EP 4 273 750 A1**
(43) Date of publication of application: **08.11.2023**
(21) Application number: 21914355.9
(22) Date of filing: 28.12.2021
(51) Int. Cl.: G06N 3/04, G06N 3/08, G06N 5/00, G06N 7/00

(54) **DATA PROCESSING METHOD AND APPARATUS, COMPUTING DEVICE, AND TEST SIMPLIFICATION DEVICE**

(30) Priority: 29.12.2020 CN 202011591254
(71) Applicant: ALIBABA GROUP HOLDING LIMITED, George Town, Grand Cayman (KY)
(72) Inventor: ZHANG, Mengyuan, Hangzhou, Zhejiang 311121 (CN)
(74) Representative: Finnegan Europe LLP
(86) International application number: PCT/CN2021/141953
(87) International publication number: WO 2022/143621

(57) **Abstract**

The example of the present application provides a data processing method and device, a computing device and a test reduction device. The data processing method includes: determining a target function corresponding to a parameter optimization request in response to the parameter optimization request; in a process of performing a parameter test on any candidate parameter by the target function, calling a test reduction module to judge whether the parameter test meets a reduction condition or not, and obtaining a judging result; if the judging result is that the parameter test meets the reduction condition, stopping the parameter test of the candidate parameter; and if the judging result is that the parameter test does not meet the reduction condition, continuously executing the parameter test of the candidate parameter to obtain the test result of the candidate parameter. The example of the present application improves the parameter test efficiency.

## Description

This application claims priority to Chinese Patent Application No. 202011591254.7, filed on December 29, 2020 and titled "Data Processing Method and Device, Computing Device and Test Reduction Device", the content of which is incorporated herein by reference in its entirety.

### TECHNICAL FIELD

The present application relates to the technical field of a computer, in particular to a data processing method and device, a computing device and a test reduction device.

### BACKGROUND

Many parameters, such as hyperparameters composed of parameters such as iteration number and network depth and node parameters set for each computing node in a neural network model training process, need to be involved in model computing processes of machine learning models, neural network models, etc. In order to obtain more accurate computing results, it may often be necessary to set the parameters of the model to an optimal set of parameters. A common parameter optimization method may mainly include a black box optimization algorithm and a white box optimization algorithm.

In the prior art, a target function in the black box optimization algorithm has a "black box" feature, and a mathematical expression form of the target function is unknown and has high complexity. When parameters are optimized by using the black box optimization algorithm, a series of candidate parameters are mainly generated, and the target function is used to respectively perform a parameter test on a plurality of candidate parameters to obtain the test results respectively corresponding to the plurality of candidate parameters, and then, the optimal target parameter with the optimum test result is selected from the plurality of candidate parameters according to the test result.

It can be seen from the above description that according to the existing parameter optimization method, parameter tests are respectively performed on a plurality of candidate parameters to obtain test results of all candidate parameters, and the parameter test process is complicated, so that the parameter optimization efficiency is low.

### SUMMARY

In view of this, the example of the present application provides a data processing method and device, a computing device and a test reduction device to solve the technical problem of low parameter optimization efficiency due to complicated parameter test process in the prior art.

In a first aspect, the example of the present application provides a data processing method, including:
determining a target function corresponding to a parameter optimization request in response to the parameter optimization request;
in a process of performing a parameter test on any candidate parameter by the target function, calling a test reduction module to judge whether the parameter test meets a reduction condition or not, and obtaining a judging result;
if the judging result is that the parameter test meets the reduction condition, stopping the parameter test of the candidate parameter; and
if the judging result is that the parameter test does not meet the reduction condition, continuously executing the parameter test of the candidate parameter to obtain the test result of the candidate parameter.

In a second aspect, the example of the present application provides a data processing method, including:
determining a processing resource corresponding to a parameter processing interface in response to a request of calling the parameter processing interface;
and executing the following steps by using the processing resource corresponding to the parameter processing interface:
   determining a target function corresponding to a parameter optimization request in response to the parameter optimization request;
   in a process of performing a parameter test on any candidate parameter by the target function, calling a test reduction module to judge whether the parameter test meets a reduction condition or not, and obtaining a judging result;
   if the judging result is that the parameter test meets the reduction condition, stopping the parameter test of the candidate parameter; and
   if the judging result is that the parameter test does not meet the reduction condition, continuously executing the parameter test of the candidate parameter to obtain the test result of the candidate parameter.

In a third aspect, the example of the present application provides a data processing method, including:
receiving a judging request for judging whether a parameter test of a target function on any candidate parameter meets a reduction condition or not initiated by a computing device, where the target function is determined when the computing device is in response to a parameter optimization request; and
judging whether the parameter test meets the reduction condition or not in response to the judging request, where
the parameter test of the candidate parameter is stopped when the reduction condition is met; and the parameter test of the candidate parameter is continuously executed when the reduction condition is not met so as to obtain a test result of the candidate parameter.

In a fourth aspect, the example of the present application provides a data processing device, including:
a first response module, configured to determine a target function corresponding to a parameter optimization request in response to the parameter optimization request;
a result obtaining module, configured to call a test reduction module in a process of performing a parameter test on any candidate parameter by the target function to judge whether a parameter test meets a reduction condition or not and to obtain a judging result;
a first processing module, configured to stop the parameter test of the candidate parameter if the judging result is that the parameter test meets the reduction condition; and
a second processing module, configured to continuously execute the parameter test of the candidate parameter to obtain the test result of the candidate parameter if the judging result is that the parameter test does not meet the reduction condition.

In a fifth aspect, the example of the present application provides a data processing device, including:
a request receiving module, configured to receive a judging request for judging whether a parameter test of a target function on the candidate parameter meets a reduction condition or not initiated by a computing device, where the target function is determined when the computing device is in response to a parameter optimization request; and
a second response module, configured to judge whether the parameter test meets the reduction condition or not in response to the judging request, where
the parameter test of the candidate parameter is stopped when the reduction condition is met; and the parameter test of the candidate parameter is continuously executed when the reduction condition is not met so as to obtain a test result of the candidate parameter.

In a sixth aspect, the example of the present application further provides a computing device. The computing device may include: a storage assembly and a processing assembly. The storage assembly is configured to store one or more computer instructions, and the one or more computer instructions are called by the processing assembly.

The processing assembly may be configured to:
determine a target function corresponding to a parameter optimization request in response to the parameter optimization request;
in a process of performing a parameter test on any candidate parameter by the target function, call a test reduction module to judge whether a parameter test meets a reduction condition or not, and obtain a judging result;
if the judging result is that the parameter test meets the reduction condition, stop the parameter test of the candidate parameter; and
if the judging result is that the parameter test does not meet the reduction condition, continuously execute the parameter test of the candidate parameter to obtain the test result of the candidate parameter.

In a seventh aspect, the example of the present application further provides a test reduction device. The test reduction device may include: a storage assembly and a processing assembly. The storage assembly is configured to store one or more computer instructions, and the one or more computer instructions are called by the processing assembly.

The processing assembly may be configured to:
receive a judging request for judging whether a parameter test of a target function on the candidate parameter meets a reduction condition or not initiated by a computing device, where the target function is determined when the computing device is in response to a parameter optimization request; and
judge whether the parameter test meets the reduction condition or not in response to the judging request,
where the parameter test of the candidate parameter is stopped when the reduction condition is met; and the parameter test of the candidate parameter is continuously executed when the reduction condition is not met so as to obtain a test result of the candidate parameter.

According to the example of the present application, in a process that the target function performs a parameter test on any candidate parameter, the parameter test of the candidate parameter is stopped to obtain an intermediate test result of the candidate parameter. If the intermediate test result of the candidate parameter does not meet the reduction condition, the parameter test of the candidate parameter is stopped. If the intermediate test result of the candidate parameter meets the parameter test, the parameter test of the candidate parameter is continuously executed to obtain the test result of the candidate parameter. The intermediate test result of the candidate parameter is monitored to confirm whether the candidate parameter needs to continuously participate in the test or not. If the test condition is not met, the parameter test of the candidate parameter is stopped. The test efficiency of the candidate parameter can be improved, the unnecessary candidate parameter test process can be reduced, and the parameter optimization efficiency can be improved.

### BRIEF DESCRIPTION OF THE DRAWINGS

In order to describe the technical solution of examples of the present application or in the prior art more clearly, drawings to be used in examples and the prior art are briefly introduced. Obviously, drawings described hereafter are only some examples of the present application. For a person of ordinary skill in the art, other drawings can also be obtained according to these drawings without any inventive efforts.
FIG. 1 is a flowchart of a data processing method according to an example provided by the example of the present application.
FIG. 2 is a flowchart of a data processing method according to another example provided by the example of the present application.
FIG. 3 is a flowchart of a data processing method according to another example provided by the example of the present application.
FIG. 4 is a flowchart of a data processing method according to another example provided by the example of the present application.
FIG. 5 is a flowchart of a data processing method according to another example provided by the example of the present application.
FIG. 6 is a flowchart of a data processing method according to another example provided by the example of the present application.
FIG. 7 is a flowchart of a data processing method according to another example provided by the example of the present application.
FIG. 8 is an example chart of a data processing method according to an example provided by the example of the present application.
FIG. 9 is a schematic structural diagram of a data processing device according to an example provided by the example of the present application.
FIG. 10 is a schematic structural diagram of a computing device according to an example provided by the example of the present application.
FIG. 11 is a schematic structural diagram of a data processing device according to an example provided by the example of the present application.
FIG. 12 is a schematic structural diagram of a test reduction device according to an example provided by the example of the present application.
FIG. 13 is a schematic structural diagram of a data processing system according to an example provided by the example of the present application.

### DETAILED DESCRIPTION

In order to describe the purpose, the technical solution and the advantages of examples of the present application more clearly, the technical solution of examples of the present application will be clearly and completely described hereinafter with reference to the accompanying drawings in the example of the present application. Obviously, the described examples are only a few, but not all, examples of the present application. Based on the examples of the present application, all other examples obtained by a person of ordinary skill in the art without making any inventive effort are within the protection scope of the present application.

Terms used in the examples of the present application are for the purpose of describing specific examples only, and are not intended to limit the present application. The singular forms "a", "said" and "the" used in the examples of the present application and the appended claims are also intended to include the plurality forms unless the context clearly indicates other meanings. "Plurality" generally includes at least two, but cases involving at least one cannot be ruled out.

It should be understood that the term "and/or" used herein merely refers to an association relationship describing associated objects, meaning that there may be three relationships, for example, A and/or B, which may mean: there are three cases of A alone, A and B together, and B alone. In addition, the character "/" used herein generally indicates that the former and later associated objects have an "or" relationship.

Depending on the context, the term "if' and "supposed" used herein can be interpreted as "when" or "while" or "in response to determination" or "in response to recognition". Similarly, depending on the context, the phrases "if it is determined that" or "if it is recognized that (a stated condition or event)" may be interpreted as "when it is determined" or "in response to determination" or "when it is recognized that (a stated condition or event)" or "in response to identification (a stated condition or event)".

It should also be noted that the terms "comprise", "include" or any other variation thereof are intended to cover a non-exclusive inclusion, such that a good or system that includes a list of elements does not only include those elements but may also include other elements not clearly listed or also include inherent elements of the good or system. Under a condition without more constraints, an element proceeded by the statement "comprise a(n)" does not preclude the existence of additional identical elements in the good or system including the element.

The technical solution of the example of the present application may be applied to a parameter optimization scene. In a parameter optimization process, whether the subsequent parameter optimization process of the parameter is executed or not is determined by judging the test condition of a candidate parameter, the parameter optimization process is reduced, and the parameter optimization efficiency is improved.

In the prior art, various parameters are involved in model computing processes of machine learning models, neural network models, etc., and the parameter selection generally has important influence on the model computing results. Therefore, some parameter optimization algorithms may be generally designed, and an optimum parameter is selected according to the set parameter optimization method. In a common black box optimization algorithm, a mathematical expression of a target function is unknown, a specific computing process of the target function is unknown, but the parameter computing result capable of being optimized is known. In a practical process of optimizing the parameter by using the black box optimization algorithm, a series of candidate parameters may be generated, the plurality of generated candidate parameters are respectively subjected to a parameter test by using the target function to obtain test results respectively corresponding to the plurality of candidate parameters, and then, the target parameter with the best test result is selected from the respective test results of the plurality of candidate parameters. However, by using this parameter optimization method, each of the candidate parameters needs to be subjected to parameter test to obtain the test result of each of the candidate parameters. Since the process of the parameter test is complicated, great amount of test computing is practically needed in the parameter optimization process, and the parameter optimization efficiency is low.

According to the example of the present application, in a process that the target function performs a parameter test on any candidate parameter, the parameter test of the candidate parameter is stopped to obtain an intermediate test result of the candidate parameter. If the intermediate test result of the candidate parameter does not meet the reduction condition, the parameter test of the candidate parameter is stopped. If the intermediate test result of the candidate parameter meets the parameter test, the parameter test of the candidate parameter is continuously executed to obtain the test result of the candidate parameter. The intermediate test result of the candidate parameter is monitored to confirm whether the candidate parameter needs to continuously participate in the test or not. If the test condition is not met, the parameter test of the candidate parameter is stopped. The test efficiency of the candidate parameter can be improved, the unnecessary candidate parameter test process can be reduced, and the parameter optimization efficiency can be improved.

Examples of the present application are further illustrated in detail in conjunction with the accompanying drawings.

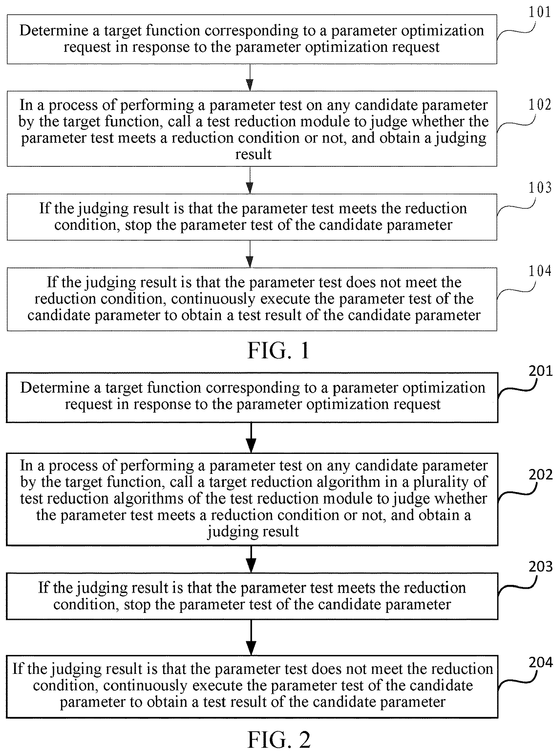

As shown in FIG. 1, it is a flowchart of a data processing method according to an example provided by the example of the present application. The method may include the following steps:
101: A target function corresponding to a parameter optimization request is determined in response to the parameter optimization request.

The data processing method provided by the example of the present application may be applied to a computing device. The computing device, for example, may include: a computer, a server, a cloud server, a super personal computer, a notebook computer, a tablet computer, etc. The specific type of the computing device is not too much limited by the example of the present application.

Optionally, the parameter test process may be a process of performing model computing on the input candidate parameter for the target function to obtain an output result, i.e., a target value of the candidate parameter. In a process that the parameter optimization or screening is practically needed, the candidate parameter sampling may be continuously completed in an iteration manner, and the candidate parameter obtained through sampling may be subjected to a parameter test to obtain a target value respectively corresponding to each candidate parameter, and the target parameter with the optimum target value is selected from the plurality of candidate parameters after the parameter test is ended.

The parameter optimization request may include test information of the parameter test, for example, may include function information of the target function and a parameter sampling policy. The function information of the target function, for example, may be contents capable of marking different functions such as a function name, a calling link or a function mark. The parameter sampling policy specifically may be a candidate parameter generation manner. Through the parameter sampling policy, new candidate parameters may be continuously generated. The target function may include a mathematical model or a network model, etc., and may have the "black box" feature. That is, the mathematical expression form of the target function is unknown or is a high-complexity computing model difficult to be directly described or depicted by a mathematical formula.

Optionally, the parameter optimization request may be initiated by a user. The user may provide test information of the parameter test. A user side may detect the test information of the parameter test provided by the user, generate a parameter optimization request based on the test information of the parameter test, and send the parameter optimization request to the computing device provided with the data processing method as shown in FIG. 1. In addition, the parameter optimization request may alternatively be automatically generated when the computing device or other clients judge that the parameter selection needs to be performed. For example, when a condition that the target function needs parameter selection is detected, the parameter optimization request may be generated based on the target function and the parameter sampling policy of the target function, and the parameter optimization request is provided to the computing device provided with the data processing method as shown in FIG. 1.

At this moment, it may also be included that the parameter optimization request sent by the user is received, and after the judging result of the candidate parameter is obtained, the judging result may be output to the user to realize the parameter optimization interaction with the user.

102: In a process of performing a parameter test on any candidate parameter by the target function, a test reduction module is called to judge whether the parameter test meets a reduction condition or not, and to obtain a judging result.

In the example of the present application, the candidate parameter may be a parameter needing to be optimized in various mathematical computing models such as a machine learning model, a neural network model, a three-dimensional computing model and a game model. The candidate parameter in the examples of the present application may be a common model parameter, a hyperparameter, a game model parameter, a data model parameter, etc. The parameter type and the parameter quantity of the candidate parameter in the examples of the present application are not too much limited. The hyperparameter may be a parameter set before learning instead of a parameter in a model training process, and may also be a model parameter which is not involved in the practical training process. For example, the network depth, the number of iteration times, the quantity of nerve cells in each layer of the machine learning model may belong to the hyperparameter, the HP loss value under attack in a game program may also belong to the hyperparameter, or during word query in the field of electronic commerce, the quantity of used query words may also belong to the hyperparameter, and the market time step length, feature dimension and the like in a financial market also belong to the hyperparameter.

The candidate parameter may be a parameter value respectively corresponding to a plurality of sub parameters. The candidate parameter may also be referred to as a candidate parameter sample. For example, a certain candidate parameter may include parameter values respectively corresponding to three sub parameters A, B and C. When A is 0.1, B is 0.3, and C is 0.1, a candidate parameter may be formed. When A is 0.1, B is 0.3, and C is 0.15, a candidate parameter may be formed. The quantity and value of sub parameters of the candidate parameter may be set according to the practical use requirements of the parameter. As a possible implementation, the first candidate parameter may be randomly generated or obtained based on the input of a user, and the later candidate parameter may be obtained through resampling according to the historical parameter and the test result of the historical parameter. 103: If the judging result is that the parameter test meets the reduction condition, the parameter test of the candidate parameter is stopped.

104: If the judging result is that the parameter test does not meet the reduction condition, the parameter test of the candidate parameter is continuously executed to obtain the test result of the candidate parameter.

The reduction condition refers to condition judgement on whether the candidate parameter needs to complete the whole parameter test. Specifically, the reduction reduction condition may be judged through the intermediate test result of the candidate parameter test, so that the test process of the candidate parameter is effectively monitored, the occurrence of an invalid parameter test is avoided, and the parameter test efficiency is improved.

In the example of the present application, after the target function corresponding to the parameter optimization request of the candidate parameter is determined in response to the parameter optimization request, in a process of performing a parameter test on any candidate parameter by the target function, a test reduction module may be called to judge whether a parameter test meets a reduction condition or not, and to obtain a judging result. If the judging result of the candidate parameter is that the candidate parameter meets the reduction condition, the parameter test of the candidate parameter is stopped. If the judging result is that the parameter test does not meet the reduction condition, the parameter test of the candidate parameter may be continuously executed to obtain the test result corresponding to the candidate parameter. The parameter test of the candidate parameter is monitored to confirm whether the candidate parameter needs to completely execute the whole parameter test or not so as to improve the test efficiency of the candidate parameter, reduce the unnecessary candidate parameter test process and improve the parameter optimization efficiency.

In the example as shown in FIG. 1, the parameter quantity of the candidate parameter may be one or several. That is, the parameter test may be performed on one candidate parameter in one step. In order to improve the test efficiency, the parameter test may also be performed on a plurality of candidate parameters at the same time. In the above one or more parameter tests, the reduction condition judgement may be performed to realize the monitoring on the parameter test process of one or more candidate parameters. In addition, during the parameter test on the plurality of candidate parameters at the same time, the parameter test may be performed in a multi-process and software and hardware combination manner to further improve the parameter test efficiency.

In practical application, the technical solution of the example of the present application may be configured in a cloud server. The user may send a parameter optimization request through a user side to the cloud server provided with the data processing method as shown in FIG. 1. After receiving the request, the cloud server may execute the data processing method as shown in FIG. 1, and feed back the obtained test result to the user side, and the user side outputs the test result of the candidate parameter to the user. After the at least one candidate parameter meeting the reduction condition is additionally obtained, the test result respectively corresponding to the at least one candidate parameter may be obtained. After the target parameter meeting the parameter optimum condition is selected from the at least one candidate parameter according to the test result respectively corresponding to the at least one candidate parameter, the target parameter may be sent to the user side, and the user side outputs the optimum target parameter to the user.

As a possible implementation, in a process of performing the parameter test on any candidate parameter by the target function, the intermediate test result of the parameter test may be obtained, and the reduction condition of the parameter test is judged through the intermediate test result.

The operation that the test reduction module is called to judge whether the parameter test meets the reduction condition or not may specifically include: the parameter test process of the candidate parameter by the target function is monitored, whether the target function runs to the preset monitoring node of the parameter test or not is judged, and if YES, the intermediate test result of the candidate parameter at the monitoring node is obtained.

In the parameter test process, after the target reduction algorithm determines that the parameter test runs to the monitoring node, and the intermediate test result is obtained, the parameter test may continue. When the judging result is that the parameter test meets the reduction condition, the parameter test of the candidate parameter can be stopped.

The monitoring node may be specifically set according to the test stage of the parameter test. In some examples, a monitoring node may be set at each parameter test stage. The parameter test stage may include: an early test stage, a middle test stage and a late test stage. Each of the parameter test stages may be set according to the computing process of the target function, and specifically, the target function may be divided into a first function, a second function and a third function according to a calculation sequence. A computing stage of the first function may be the early test stage. The first monitoring node may be set at the computing result position of the first function, or the monitoring node may be set in the middle of the computing process of the first function. A computing stage of the second function may be a middle test stage. The second monitoring node may be set at the computing result position of the second function, or the monitoring node may be set in the middle of the computing process of the first function. A computing stage of the third function may be a final test stage. The computing result of the third function is the test result. No monitoring node may be set, or no monitoring node may be set in the middle of the computing process of the third function. The monitoring node may be specifically set according to practical monitoring requirements. Through the division of the early, middle and final test stages, different test stages of the parameter test may be monitored in a targeted manner, and the efficient and effective monitoring is realized.

As another possible implementation, in a process of performing the parameter test on any candidate parameter by the target function, the operation that the intermediate test result of the candidate parameter is obtained may include: in a process of performing the parameter test on any candidate parameter by the target function, when the current executing result meets the monitoring condition according to a detection result, the intermediate test result of the candidate parameter is obtained. The monitoring condition may be set according to a specific process of the test and monitoring requirements. For example, the monitoring condition may be that the number of iteration times reaches an iteration threshold.

In practical application, the test reduction module may provide a plurality of test reduction algorithms. The test reduction module may be a program or sub program for executing a function of judging whether the parameter test meets the reduction condition or not, and the test reduction module may provide an interface associated with an external environment to realize the data or information transmission.

The test reduction module may be configured in the computing device of the example as shown in FIG. 1 or directly configured in the reduction device, and the reduction device may be a device different from the computing device provided with the data processing method provided by the example as shown in FIG. 1. The reduction device specifically may be a computer, a server, a cloud server, a super personal computer, a notebook computer, a tablet computer, etc. The specific type of the reduction device is not too much limited by the example of the present application.

As shown in FIG. 2, it is a flowchart of a data processing method according to another example provided by the example of the present application. The method may include the following steps:
201: A target function corresponding to a parameter optimization request is determined in response to the parameter optimization request.

Parts of steps in the example of the present application are the same as steps in the example as shown in FIG. 1, and are not repeated herein for considering the description simplicity.

Operationally, when the parameter optimization request is initiated by the user, the target function may be automatically matched for the parameter optimization request initiated by the user, and the target function may be determined by the user. When the target function may be determined by the user, an input interface of the target function may be provided. The user side may detect the target function input by the user, and transmit the target function to the computing device executing the data processing method.

Optionally, before determining a target function corresponding to a parameter optimization request in response to the parameter optimization request, the operation may further include: the parameter optimization request triggered by the user by aiming at one black box optimization algorithm is detected. The operation of determining the target function corresponding to a parameter optimization request in response to the parameter optimization request may include: the target function corresponding to the black box optimization algorithm selected by the user is determined in response to the parameter optimization request.

202: In a process of performing a parameter test on any candidate parameter by the target function, the target reduction algorithm in the plurality of test reduction algorithms of the test reduction module is called to judge whether the parameter test meets a reduction condition or not, and to obtain a judging result.

The test reduction policy may include a plurality of test reduction algorithms, one target reduction algorithm may be selected from the plurality of test reduction algorithms to judge whether the parameter test meets the reduction condition or not. The plurality of provided test reduction algorithms may be matched with different parameter tests, so that the selectivity of the reduction algorithms is increased, and a wider selection space is provided.

203: If the judging result is that the parameter test meets the reduction condition, the parameter test of the candidate parameter is stopped.

204: If the judging result is that the parameter test does not meet the reduction condition, the parameter test of the candidate parameter is continuously executed to obtain the test result of the candidate parameter.

In the example of the present application, after the target function corresponding to the parameter optimization request of the candidate parameter is determined in response to the parameter optimization request, in a process of performing a parameter test on any candidate parameter by the target function, a target reduction algorithm in a test reduction module may be called to judge whether a parameter test meets a reduction condition or not, and to obtain a judging result. If the judging result of the candidate parameter is that the candidate parameter meets the reduction condition, the parameter test of the candidate parameter is stopped. By determining the target reduction algorithm, the parameter test may be accurately judged to obtain a precise judging result. If the judging result is that the parameter test does not meet the reduction condition, the parameter test of the candidate parameter may be continuously executed to obtain the test result corresponding to the candidate parameter. The parameter test of the candidate parameter is monitored to confirm whether the candidate parameter needs to completely execute the whole parameter test or not so as to improve the test efficiency of the candidate parameter, reduce the unnecessary candidate parameter test process and improve the parameter optimization efficiency.

As an example, the target reduction algorithm may be determined in a following manner from the plurality of test reduction algorithms: the target reduction algorithm matched with the parameter test is searched from the plurality of test reduction algorithms of the test reduction module.

The determination step of the target reduction algorithm may be executed at one side of the computing device, and may also be executed at one side of the device provided with a test reduction module.

Optionally, the operation that in a process of performing the parameter test on any candidate parameter by the target function, the test reduction module is called to judge whether a parameter test meets a reduction condition or not, and a judging result is obtained may include: a judging request for judging whether the parameter test meets the reduction condition or not is generated; and the judging request is sent to the test reduction module so that the test reduction module is in response to the judging request, and whether the parameter test meets the reduction condition or not is judged.

Specific generation manners of the judging request may include various types, different generation manners may correspond to different response manners, and a plurality of generation manners of the judging request will be illustrated hereafter.

Generation manner I: the judging request may be generated from a test handle or a test mark for performing the parameter test on the candidate parameter by the target function, the test reduction module may monitor the parameter test to obtain an intermediate test result of the parameter test, and whether the intermediate test result meets the reduction condition or not is judged.

Generation manner II: in a process that the target function performs a parameter test on any candidate parameter, the intermediate test result of the candidate parameter may be obtained, and the judging request is generated based on the intermediate test result. The test reduction module may judge whether the intermediate test result meets the reduction condition or not after obtaining the intermediate test result in the judging request.

Generation manner III: in a process that the target function performs a parameter test on any candidate parameter, a judging request may be generated on the target reduction algorithm. After the test reduction module obtains the target reduction algorithm in the judging request, the target reduction algorithm may be fed back. The computing device obtains the target reduction algorithm of the judging request, the reduction judgment may be performed on the parameter test of the candidate parameter, and specifically, the intermediate test result of the candidate parameter may be judged.

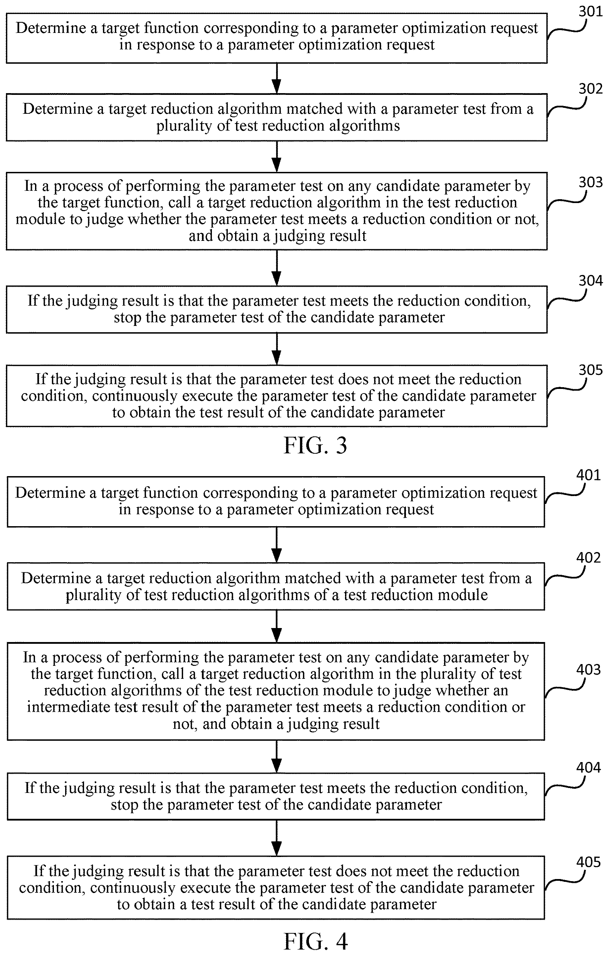

When the target reduction algorithm is executed at one side of the computing device, as shown in FIG. 3, it is a flowchart of a data processing method according to another example provided by the example of the present application. The method may include the following steps:
301: A target function corresponding to a parameter optimization request is determined in response to the parameter optimization request.
302: The target reduction algorithm matched with the parameter test is determined from the plurality of test reduction algorithms.
303: In a process of performing a parameter test on any candidate parameter by the target function, a target reduction algorithm in a test reduction module is called to judge whether the parameter test meets a reduction condition or not, and to obtain a judging result.
304: If the judging result is that the parameter test meets the reduction condition, the parameter test of the candidate parameter is stopped.
305: If the judging result is that the parameter test does not meet the reduction condition, the parameter test of the candidate parameter is continuously executed to obtain the test result of the candidate parameter.

Optionally, the operation that the target reduction algorithm matched with the parameter Siheyuan is determined from the plurality of test reduction algorithms may include: the plurality of test reduction algorithms are shown for the user, and the target reduction algorithm selected by the user from the plurality of test reduction algorithms is obtained.

In the example of the present application, in a process of performing a parameter test on any candidate parameter by the target function, the target reduction algorithm of the test reduction module may be called to judge whether the parameter test meets the reduction condition or not, and to obtain the judging result. Then, the plurality of test reduction algorithms are determined. The target reduction algorithms matched with the parameter test are determined from the plurality of test reduction algorithms, and an optional test reduction algorithm is provided, so that the parameter reduction scheme is effectively ensured to ensure the adaptation to different parameter tests, and the application range of the parameter reduction is effectively expanded, and the utilization efficiency of the parameter reduction is improved. After the target reduction algorithm is ensured, whether the parameter test of the candidate parameter meets the reduction condition or not may be judged according to the target reduction algorithm. If the parameter test of the candidate parameter meets the reduction condition, the test parameter of the candidate parameter is stopped. If the parameter test of the candidate parameter does not meet the reduction condition, the test parameter of the candidate parameter is continuously executed to obtain the test result of the candidate parameter. By effective test condition judgment on the candidate parameter, invalid parameter tests of the candidate parameter can be reduced, the time loss of the parameter test is reduced, and the test efficiency of the parameter test is improved.

As an example, the operation that the target reduction algorithm matched with the parameter test is searched from the plurality of test reduction algorithms of the test reduction module may include:
First test information corresponding to the parameter test of the candidate parameter is determined.
Second test information respectively associated with the plurality of test reduction strategies is obtained.

Target test information matched with the first test information is searched from the second test information respectively corresponding to the plurality of test reduction algorithms.

The test reduction algorithm corresponding to the target test information is determined as the target reduction algorithm.

Optionally, the test reduction algorithm may be the reduction policy on the test process of the candidate parameter. That is, the test reduction algorithm may be used to estimate the training effect on the candidate parameter in the parameter test process of the candidate parameter so as to judge whether the candidate parameter needs to be continuously subjected to the parameter test or not.

Optionally, the test information may be attribute information relevant to the parameter test. The test information of different parameter tests may be defined by using test attribute information. The first test information may be attribute information of the parameter test of the candidate parameter. The second test information may be attribute information of the parameter test applicable to the corresponding test reduction algorithm.

The first test information may be node information of the test monitoring node defined by the parameter test of the candidate parameter, the parameter test type corresponding to the parameter test of the candidate parameter and/or the parameter test stage corresponding to the parameter test of the candidate parameter.

Any piece of second test information may include: one or more of the node information of the test monitoring node applicable to the corresponding test reduction algorithm, the parameter test type, and the parameter test stage.

The node information of the test monitoring node may be specifically a mapping relationship or a mapping target of a corresponding function of the target function at the test monitoring node. The test reduction algorithm matched with the node information may be built, a corresponding association relationship is set for the node information and the test reduction algorithm set for the node information, and the target reduction policy matched with the node information of the test monitoring node may be searched through the association relationship. For example, the hyperparameter to be optimized is the network depth, and the mapping relationship of the function corresponding to the monitoring node is the feature extraction dimension and the reliability influence. Supposed that the feature extraction dimension influence is that with the network depth increasing, the reliability of the extracted feature is higher if the extracted feature dimension is higher, the test reduction algorithm may be set to realize that the feature dimension is smaller than a dimension threshold, and the feature reliability is higher than a precision threshold.

For a specific example, supposed that the dimension threshold set by the test reduction algorithm is 500, the reliability is 85%, if the feature dimension of the network depth extraction of the candidate parameter being 10 is 1000, the reliability is 70%, at this moment, the candidate parameter being 10 does not meet the reduction condition, and the parameter test of the candidate parameter 10 may be stopped. If the candidate parameter is 5, the extracted feature dimension is 500, the reliability is 90%, at this moment, the candidate parameter 5 may meet the reduction condition, the parameter test of the candidate parameter 5 may be continued to obtain the final test requirement.

For another example, the HP loss value in a game scene may be used as a to-be-optimized parameter. By considering from the game experience of a user, too high HP loss value may cause too short game time, and too high HP loss value may cause game interestingness reduction. In order to achieve the HP loss value considering both the game time and the game interestingness, the user may define the interruption information of the HP loss value while estimating the use effect of the HP loss value, and the target reduction algorithm is set for the interruption information.

For another example, in an electronic commerce scene, during content recommendation for the user, through target recommendation content obtaining, a plurality of sub parameters may be used to respectively represent features such as browsing behaviors, click habits, etc. of the user, the weighted sum on the feature information respectively corresponding to the plurality of sub parameters according to the weight of each sub parameter as the proportion may be used as a searching feature of the user target recommendation content, and the respective proportion of the plurality of sub parameters may be used as a candidate parameter to be optimized. In a process of the parameter test of the candidate parameter, one ratio respectively corresponding to the plurality of sub parameters is preset and may be used as a candidate parameter. During the parameter test on the candidate parameter, the detection feature of the user may be specifically determined through the candidate parameter, the target recommendation content may be searched for the user based on the searching feature, and then, the click rate of the user on the target recommendation content is predicted to judge whether the current determined ratio respectively corresponding to the plurality of sub parameters may be used as a final result or not. Generally, the above test process is complicated, and the computing amount is great. In order to reduce the computing amount, in the process of the parameter test, the "target recommendation content searched for the user based on the current searching feature" may be used as a monitoring node, and whether the target recommendation content meets the reduction condition or not is judged. For example, the similarity of the target recommendation content to the current searching feature is judged. If the similarity is lower than a preset similarity threshold, it may be confirmed that the target recommendation content obtained through searching based on the current searching feature may be inaccurate, and the subsequent click rate prediction process is unnecessary to execute. At this moment, the current parameter test of the candidate parameter is stopped, the generation and the parameter test of a next candidate parameter may be continued, the unnecessary parameter test is reduced, and the parameter test efficiency may be improved.

Optionally, a plurality of test reduction algorithms may be included, so that different algorithm marks may be used to distinguish the test reduction algorithms. When the algorithm marks of the test reduction algorithms are known, if the specific algorithm logics of the test reduction algorithms are known, the test information suitable for each test reduction algorithm may be recorded in detail, so the method may further include: second test information is respectively generated for the plurality of test reduction algorithms. The test information may include: the node information of the test monitoring node, the parameter test type, and one or more of the parameter test stages. Therefore, the second test information capable of respectively corresponding to the plurality of test reduction algorithms may include: applicable node information, zero, one or more applicable parameter test types, and/or zero, one or more applicable parameter test stages.

Any candidate parameter may have the same parameter test type. The corresponding reduction algorithm may be set according to the parameter test type. As a possible implementation, the first test information may include: a parameter test type.

Optionally, the operation that target test information matched with the first test information is searched from the second test information respectively corresponding to the plurality of test reduction algorithms may include:
The target test information matched with the parameter test type of the first test information is searched from the second test information respectively corresponding to the plurality of test reduction algorithms.

Second test information may respectively correspond to the plurality of test reduction algorithms. The second test information may be attribute information of the parameter test applicable to the test reduction algorithm, and may be specifically list information of the test attribute information applicable to the test reduction algorithm. Through the second test information respectively corresponding to the plurality of test reduction algorithms, the second test information of the parameter test type in the first test information may be searched to obtain the target test information matched with the first test information.

In a possible design, the parameter test type may include: a serial test type and a parallel test type.

Optionally, the operation that the target test information matched with the parameter test type of the first test information is searched from the second test information respectively corresponding to the plurality of test reduction algorithms may include:

If the parameter test type of the candidate parameter is the serial test type, the target test information with the serial test type is determined in the second test information respectively corresponding to the plurality of test reduction algorithms; or
if the parameter test type of the candidate parameter is the parallel test type, the target test information with the parallel test type is determined in the second test information respectively corresponding to the plurality of test reduction algorithms.

The operation that the target test information with the serial test type is determined in the second test information respectively corresponding to the plurality of test reduction algorithms may include: the target test information with the serial test type in the second test information corresponding to the plurality of test reduction algorithms is searched. Any test reduction algorithm corresponds to the second test information. If the second test information of a certain test reduction algorithm includes the serial test type, it shows that the test reduction algorithms are applicable to the parameter test of the serial test type, and the test reduction algorithm may be determined to be the target reduction algorithm.

The operation that the target test information with the parallel test type is determined in the second test information respectively corresponding to the plurality of test reduction algorithms may include: the target test information with the parallel test type in the second test information corresponding to the plurality of test reduction algorithms is searched. Any test reduction algorithm corresponds to the second test information. If the second test information of a certain test reduction algorithm includes the parallel test type, it shows that the test reduction algorithms are applicable to the parameter test of the parallel test type, and the test reduction algorithm may be determined to be the target reduction algorithm.

As further another possible implementation, the first test information may include: a parameter test stage.

Optionally, the operation that target test information matched with the first test information is searched from the second test information respectively corresponding to the plurality of test reduction algorithms may include:
Target test information matched with the parameter test stage of the first test information is searched from the second test information respectively corresponding to the plurality of test reduction algorithms.

In a possible design, the parameter test stage may include: an early test stage, a middle test stage and a final test stage.

Optionally, the operation that the target test information matched with the parameter test stage of the first test information is searched from the second test information respectively corresponding to the plurality of test reduction algorithms may include:
If the parameter test stage of the candidate parameter is the early test stage, the target test information with the early test stage is determined in the second test information respectively corresponding to the plurality of test reduction algorithms; or
if the parameter test stage of the candidate parameter is the middle test stage, the target test information with the middle test stage is determined in the second test information respectively corresponding to the plurality of test reduction algorithms; or
if the parameter test stage of the candidate parameter is the final test stage, the target test information with the final test stage is determined in the second test information respectively corresponding to the plurality of test reduction algorithms.

The operation that the target test information with the early test stage is determined in the second test information respectively corresponding to the plurality of test reduction algorithms may include: the target test information with the early test stage in the second test information corresponding to the plurality of test reduction algorithms is searched. Any test reduction algorithm corresponds to the second test information. If the second test information of a certain test reduction algorithm includes the early test stage, it shows that the test reduction algorithms are applicable to the parameter test of the early test stage, and the test reduction algorithm may be determined to be the target reduction algorithm.

The operation that the target test information with the middle test stage is determined in the second test information respectively corresponding to the plurality of test reduction algorithms may include: the target test information with the middle test stage in the second test information corresponding to the plurality of test reduction algorithms is searched. Any test reduction algorithm corresponds to the second test information. If the second test information of a certain test reduction algorithm includes the middle test stage, it shows that the test reduction algorithms are applicable to the parameter test of the middle test stage, and the test reduction algorithm may be determined to be the target reduction algorithm.

The operation that the target test information with the final test stage is determined in the second test information respectively corresponding to the plurality of test reduction algorithms may include: the target test information with the final test stage in the second test information corresponding to the plurality of test reduction algorithms is searched. Any test reduction algorithm corresponds to the second test information. If the second test information of a certain test reduction algorithm includes the final test stage, it shows that the test reduction algorithms are applicable to the parameter test of the final test stage, and the test reduction algorithm may be determined to be the target reduction algorithm.

In addition, the serial test type and the parallel test type are listed for the parameter test types in the example of the present application. In practical application, besides the serial test type and the parallel test type, other parameter test types, such as a sampling test type performing the parameter test after sampling the plurality of candidate parameters, may further be included, and the parameter test types are not too much limited in the example of the present application.

The parameter test stage is also divided in the example of the present application, and is specifically divided into an early test stage, a middle test stage and a final test stage. In practical application, the division of the parameter test stage is performed according to the specific computing process of the test process and the test time. The stage division manner in the example of the present application is only illustrative, and does not constitute the specific limitation to the test stage division in the present application, and any stage division through the test time, test computing content or process may belong to the stage division solution protected by the example of the present application.

As another possible test manner, the first test information may further include: a parameter test stage and a parameter test type.

Optionally, the operation that target test information matched with the first test information is searched from the second test information respectively corresponding to the plurality of test reduction algorithms may include:
Target test information matched with the parameter test type and the parameter test stage at the same time is determined from the second test information respectively corresponding to the plurality of test reduction algorithms.

In a possible design, the parameter test type may include a parallel test type and a serial test type. The parameter test stage may include: an early test stage, a middle test stage and a final test stage.

Target test information matched with the parameter test type and the parameter test stage at the same time is determined from the second test information respectively corresponding to the plurality of test reduction algorithms.

By regarding the parameter test stage and the parameter test type as the selection basis of the reduction algorithm at the same time, the obtained target reduction algorithm may meet the requirements of the parameter test type and the parameter test stage, and the target reduction algorithm meeting more reduction requirements is provided.

As further another example, the plurality of test reduction algorithms include a self-defined reduction algorithm set by a target user.

The target reduction algorithm may also be determined in a following manner from the plurality of test reduction algorithms:
If the self-defined reduction algorithm set by a target user exists in the plurality of test reduction algorithms, the self-defined reduction algorithm is determined as the target reduction algorithm.

The first test information may further include a self-defined mark set by the target user for the parameter test of the candidate parameter. The self-defined mark is used to mark whether the target user sets the self-defined reduction algorithm or not. If the self-defined mark is true, the condition that the self-defined reduction algorithm set by the target user for the candidate parameter exists in the plurality of test reduction algorithms is directly confirmed, the self-defined reduction algorithm set by the target user may be used as the target reduction algorithm. If the self-defined mark is false, the condition that the target user does not set the self-defined algorithm. At this moment, the target test information matched with the first test information may be searched from the second test information respectively corresponding to the plurality of test reduction algorithms.

As an example, the method may further include:
Based on the self-defined reduction algorithm set by the target user, the test reduction module is controlled to store the self-defined reduction algorithm.

Optionally, an input interface of the reduction algorithm may be provided, and the reduction algorithm input by the user in the interface may be the self-defined reduction algorithm. By providing the self-defined reduction algorithm, the applicability of the reduction algorithm may be increased, and the reduction algorithm is applicable to the reduction of various types of parameter tests, and the test reduction range is expanded. The input interface of the reduction algorithm may be shown by the computing device provided with the data processing method provided by this example of this applicable for the user needing parameter optimization, and may also be provided for the user by the reduction module to obtain the self-defined reduction algorithm input by the user. After the computing device obtains the self-defined reduction algorithm, the self-defined reduction algorithm may be sent to the test reduction module to be stored by the test reduction module. The test reduction module may store the self-defined reduction algorithm when detecting the self-defined reduction algorithm input by the user.

In some examples, the operation that the self-defined reduction algorithm is determined as the target reduction algorithm if the self-defined reduction algorithm set by a target user exists in the plurality of test reduction algorithms may further include:

If the self-defined reduction algorithm set by a target user exists in the plurality of test reduction algorithms, prompt information showing existence of the self-defined reduction algorithm is generated.

The prompt information is shown to the target user so that the target user confirms whether the self-defined algorithm is applicable to the parameter test or not.

The self-defined reduction algorithm is determined as the target reduction algorithm if the target user executes a confirming operation aiming at the self-defined reduction algorithm applicable to the parameter test.

By providing tips about the self-defined reduction algorithm for the user, the user is enabled to effectively monitor the reduction policy of the parameter test, and the effective interaction of the reduction algorithm is realized.

In some examples, the candidate parameter may be a parameter needing the parameter test, through the parameter test, the use effect of the candidate parameter may be estimated, and the parameter test result is obtained.

As an example, the operation that in a process of performing a parameter test on any candidate parameter by the target function, the test reduction module is called to judge whether an intermediate test result of the parameter test meets a reduction condition or not, and to obtain a judging result may include: in the process of performing the parameter test on any candidate parameter by the target function, the test reduction module is called to judge whether the intermediate test result of the parameter test meets the reduction condition or not, and the judging result is obtained.

The intermediate test result of the parameter test is obtained, whether the intermediate test result meets the reduction condition of the parameter test or not is judged to determine whether the candidate parameter may continuously participate in the subsequent parameter test or not.

In a possible design, the monitoring node of the parameter test of the candidate parameter may be set. In the parameter test of the candidate parameter, a plurality of monitoring nodes may be set to monitor a plurality of nodes. The operation that in a process of performing a parameter test on any candidate parameter by the target function, the intermediate test result of the parameter test is obtained may include: in a process of performing the parameter test on any candidate parameter by the target function, the corresponding intermediate test result of the candidate parameter at the at least one monitoring node may be obtained.

As a possible implementation, the condition that the intermediate test result of the candidate parameter meets the reduction condition may be specifically that: when any intermediate test result in the at least one intermediate test result of the candidate parameter meets the reduction condition, the candidate parameter meets the reduction condition, and the parameter test of the candidate parameter may be stopped.

As another possible implementation, the condition that the intermediate test result of the candidate parameter does not meet the reduction condition may be specifically that: when the at least one intermediate test result of the candidate parameter does not meet the reduction condition, the candidate parameter does not meet the reduction condition, and the parameter test of the candidate parameter is continuously executed to obtain the test result.

In practical application, the candidate parameter may be in any parameter test type in a plurality of parameter test types. The common parameter test types may include: a serial test type and a parallel test type. The serial test type may refer to that one candidate parameter is generated in each test, and the candidate parameter generated in each test is subjected to the parameter test. The parallel test type may refer to that a plurality of candidate parameters are generated in each test, and the plurality of candidate parameters are subjected to the parameter test at the same time. The candidate parameter in the example of the present application may be the candidate parameter generated in the serial test type, and may also be the candidate parameter generated in the parallel test type.

In some examples, the operation that in a process of performing a parameter test on any candidate parameter by the target function, the test reduction module is called to judge whether an intermediate test result of the parameter test meets a reduction condition or not, and to obtain the judging result may include:
in a process of performing a parameter test on any candidate parameter by the target function, the target reduction algorithm in the plurality of test reduction algorithms of the test reduction module is called to judge whether an intermediate test result of the parameter test meets a reduction condition or not, and to obtain a judging result.

As shown in FIG. 4, it is a flowchart of a data processing method according to another example provided by the example of the present application. The method may include the following steps:
401: A target function corresponding to a parameter optimization request is determined in response to the parameter optimization request.
402: The target reduction algorithm matched with the parameter test is searched from the plurality of test reduction algorithms of the test reduction module.
403: In a process of performing a parameter test on any candidate parameter by the target function, the target reduction algorithm in the plurality of test reduction algorithms of the test reduction module is called to judge whether an intermediate test result of the parameter test meets a reduction condition or not, and to obtain a judging result.
404: If the judging result is that the parameter test meets the reduction condition, the parameter test of the candidate parameter is stopped.
405: If the judging result is that the parameter test does not meet the reduction condition, the parameter test of the candidate parameter is continuously executed to obtain the test result of the candidate parameter.

In the example of the present application, the target function corresponding to the parameter optimization request is determined in response to the parameter optimization request, and the target reduction algorithm matched with the parameter test may be searched from the plurality of test reduction algorithms of the plurality of test reduction modules. By providing the option of the plurality of test reduction algorithms, the use condition of the test reduction algorithms may be expanded, the application scene of the test reduction algorithms is improved, and the multi-dimensional angle application is realized. In a process of performing a parameter test on any candidate parameter by the target function, the target reduction algorithms in the plurality of test reduction algorithms of the test reduction model may be called to judge whether the intermediate test result in the test reduction algorithms meets the reduction condition or not and to obtain the judging result. If the judging result is that the parameter test meets the reduction condition, the parameter test of the candidate parameter may be stopped. If the judging result is that the parameter test does not meet the reduction condition, the parameter test of the candidate parameter may be continuously executed to obtain the test result of the candidate parameter. The accurate judgment is realized by accurately judging whether the intermediate test result of the candidate parameter meets the reduction condition or not.

The test reduction algorithms may be methods for performing effect estimation on the intermediate test result of the candidate parameter. In practical application, a plurality of test reduction algorithms may be provided at the same time, and the target reduction algorithm matched with the current test information may be selected from the plurality of test reduction algorithms.

In some examples, the target reduction algorithm may include: a historical estimation algorithm.

Optionally, the historical estimation algorithm judges whether the intermediate test result meets the reduction condition or not specifically in the following manner:
According to a historical intermediate result and a historical test result respectively corresponding to a plurality of historical parameters, an estimated test result corresponding to the intermediate test result is estimated.

Whether the estimated test result is matched with a result threshold or not is judged.

If NO, the intermediate test result is determined to meet the reduction condition.

If YES, the intermediate test result is determined not to meet the reduction condition.

Optionally, the operation that according to a historical intermediate result and a historical test result respectively corresponding to a plurality of historical parameters, an estimated test result corresponding to the intermediate test result is estimated may include:
A historical intermediate result generated by the plurality of historical parameters at the monitoring node interrupting the parameter test of the candidate parameter is obtained.

According to the intermediate test result and the historical intermediate result respectively corresponding to the plurality of historical parameters, the estimated test result corresponding to the intermediate test result is estimated in combination with the historical test results respectively corresponding to the plurality of historical parameters.

Optionally, the operation that whether the estimation test result is matched with the result threshold or not is judged may specifically include: whether the estimation test result is greater than the result threshold or not is judged; or whether the estimation test result is smaller than the result threshold or not is judged. The value relationship between the estimation test result and the result threshold may be determined according to the specific type of the target function of the parameter test.

In a possible design, the operation that according to the intermediate test result and the historical intermediate result respectively corresponding to the plurality of historical parameters, the estimated test result corresponding to the intermediate test result is estimated in combination with the historical test results respectively corresponding to the plurality of historical parameters may specifically include: according to the historical test result and the historical intermediate result respectively corresponding to the plurality of historical parameters, the mapping relationship between the intermediate result and the test result is determined; and according to the mapping relationship between the intermediate result and the test result, the estimation test result corresponding of the intermediate test result is determined.

Further, optionally, the operation that according to the historical test result and the historical intermediate result respectively corresponding to the plurality of historical parameters, the mapping relationship between the intermediate result and the test result is determined may include: the historical intermediate result respectively corresponding to the plurality of historical parameters are subjected to curve fitting to obtain an intermediate result curve; the historical test result respectively corresponding to the plurality of historical parameters are subjected to curve fitting to obtain a test result curve; and the mapping relationship between the intermediate result and the test result is determined according to the test result curve and the intermediate result curve.

The estimation test result corresponding to the intermediate test result is obtained by the result estimation method, so that whether the intermediate test result meets the reduction condition or not may be fast judged by using the estimation test result, and the result estimation accuracy is improved.

In some examples, the target reduction algorithm may further include: a computing comparison algorithm.

The computing comparison algorithm judges whether the intermediate test result meets the reduction condition or not specifically in the following manner:
An intermediate reference value corresponding to a monitoring node for obtaining the intermediate test result in the parameter test process is determined.

Whether the intermediate reference value meets a preset reference threshold or not is judged.

If NO, the intermediate test result is determined to meet the reduction condition.

If YES, the intermediate test result is determined not to meet the reduction condition.

Optionally, the intermediate reference value may be determined according to the historical test result of the plurality of historical parameters at the monitoring node. The intermediate reference value may be specifically determined through weighted sum, mean value computing, variance computing, etc.

Difference value comparison may be performed between a mean value of the intermediate reference value and the intermediate test value, so that whether the intermediate test result meets the reduction condition or not is judged through the comparison result. At this moment, the step that whether the intermediate reference result meets the preset reference threshold or not is judged may include: whether the difference value of the intermediate reference value and the intermediate test value is smaller than a preset difference value threshold or not is judged. If YES, it is determined that the intermediate test result meets the reduction condition. If NO, it is determined that the intermediate test result does not meet the reduction condition. Alternatively, in some examples, whether the difference value is greater than the preset difference value threshold or not may be judged. If YES, it is determined that the intermediate test result meets the reduction condition. IF NO, it is determined that the intermediate test result does not meet the reduction condition. The specific condition may be determined according to the practical use requirements.

The square of the intermediate test result may be obtained through calculation of the mean value of the intermediate reference value and the intermediate test result, and the square value of the intermediate test result is obtained. The stability of the intermediate test result and the difference between the practical value and the mean value can be measured through the square value. The greater square value shows more stable intermediate test result, the smaller square value shows much instable intermediate test result and much deviation from the intermediate test result. At this moment, the operation that whether the intermediate reference value meets the preset reference threshold or not is judged may specifically include: whether the intermediate square is smaller than a square threshold or not is judged. If YES, it may be determined that the intermediate test result meets the reduction condition. If NO, it may be determined that the intermediate test result does not meet the reduction condition. Alternatively, whether the intermediate square is greater than the square threshold or not may be judged. If YES, it is determined that the intermediate test result meets the reduction condition. If NO, it is determined that the intermediate test result does not meet the reduction condition. The specific condition may be determined according to the practical use requirements.

Optionally, the historical estimation algorithm and the computing comparison algorithm may both belong to the plurality of test reduction algorithms, and the historical estimation algorithm and the computing comparison algorithm may both correspond to the second test information. When the historical estimation algorithm or the computing comparison algorithm are target reduction algorithms, it may be determined that the second test information of the historical estimation algorithm is matched with the first test information corresponding to the parameter test of the candidate parameter, or it may be determined that the second test information of the computing comparison algorithm is matched with the first test information corresponding to the parameter test of the candidate parameter. The second test information corresponding to the historical estimation algorithm and the second test information of the computing comparison algorithm may be confirmed according to the specific test attribute information of the corresponding parameter test.

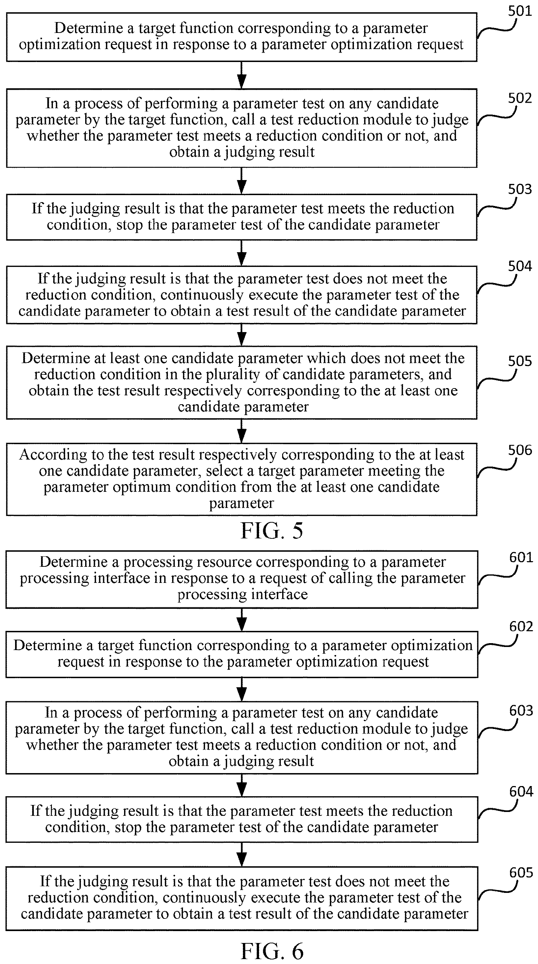

As shown in FIG. 5, it is a flowchart of a data processing method according to another example provided by the example of the present application. The method may include the following steps:
501: A target function corresponding to a parameter optimization request is determined in response to the parameter optimization request.

Parts of steps in the example of the present application are the same as parts of steps in the above-mentioned examples, and are not repeated herein for considering the description simplicity.

502: In a process of performing a parameter test on any candidate parameter by the target function, a test reduction module is called to judge whether the parameter test meets a reduction condition or not, and to obtain a judging result.

503: If the judging result is that the parameter test meets the reduction condition, the parameter test of the candidate parameter is stopped.

504: If the judging result is that the parameter test does not meet the reduction condition, the parameter test of the candidate parameter is continuously executed to obtain the test result of the candidate parameter.

505: At least one candidate parameter which does not meet the reduction condition is determined, and the test result respectively corresponding to the at least one candidate parameter is obtained.

506: According to the test result respectively corresponding to the at least one candidate parameter, the target parameter meeting the parameter optimum condition is selected from the at least one candidate parameter.

According to the example of the present application, in a process that the target function performs a parameter test on any candidate parameter, the intermediate test result of the candidate parameter is obtained. If the intermediate test result of the candidate parameter meets the reduction condition, the parameter test of the candidate parameter may be stopped. If the intermediate test result of the candidate parameter does not meet the reduction condition, the parameter test of the candidate parameter is continuously executed to obtain the test result of the candidate parameter. The parameter test of the candidate parameter is judged and verified to confirm whether to continuously execute the parameter test of the candidate parameter, the parameter test of the unnecessary candidate parameter can be reduced, and the time loss of the parameter test of the candidate parameter is reduced. Therefore, at least one candidate parameter which does not meet the reduction condition can be determined, and the test result respectively corresponding to the at least one candidate parameter is obtained. According to the test result respectively corresponding to the at least one candidate parameter, the target parameter meeting the parameter optimum condition is selected from the at least one candidate parameter. The at least one candidate parameter meeting the reduction condition is used as a parameter selection basis, the parameter space complexity is reduced, and the parameter selection efficiency and effectiveness are improved.

Optionally, test result information may be generated for any candidate parameter. During the parameter test on any candidate parameter by the target function, a test mark may be generated for the candidate parameter, and the parameter test of different candidate parameter can be marked through the test mark. In addition, in the example of the present application, the test is interrupted in the parameter test process of the candidate parameter, the test condition is judged, and then, the candidate parameter may stop participating in the parameter test and may continuously participate in the parameter test. In order to distinguish the candidate parameter completing the parameter test and the candidate parameter not completing the parameter test, test state information may be set for the candidate parameter. The test state information may include: in test, completed or reduced. In test refers to that the parameter test of the candidate parameter is proceeding. Completed may mark that the candidate parameter has completed the parameter test and has the corresponding test result. Reduced may mark that the candidate parameter does not complete the parameter test, and practically has no test result. Therefore, in order to distinguish the parameter tests, test results and reduction results of different candidate parameters, the method may further include: generating first test information for the parameter test of the candidate parameter. The test result information of the candidate parameter may include: a test mark, a candidate parameter, a test result and test state information.

When the test state information of any candidate parameter is reduced, a poor test result may be directly set for the candidate parameter to directly distinguish the test result obtained by the candidate parameter completing the parameter test. For example, supposed that the test result obtained by the candidate parameter completing the parameter test is between 0.5 and 0.95, a test result of 0.01 to 0.1 may be set for the candidate parameter with the test state information being reduced, so that the candidate parameters of different test state information can be directly distinguished.

Optionally, the operation that at least one candidate parameter which does not meet the reduction condition is determined, and the test result respectively corresponding to the at least one candidate parameter is obtained may include: the test result information respectively corresponding to the plurality of candidate parameters is obtained, the at least one candidate parameter with the test state information being completed in the test result information respectively corresponding to the plurality of candidate parameters is determined, and the test result in the test result information corresponding to the at least one candidate parameter is obtained.

The test result may be a use effect value obtained by performing parameter estimation on the candidate parameter in the parameter test. The test result is better if the use effect value is higher. The test result is poorer if the use effect value 2 is lower. The operation of selecting the target parameter meeting the parameter optimization condition from the at least one candidate parameter may include: the candidate parameter with the greatest use effect corresponding to the test result is selected from the test result respectively corresponding to the at least one candidate parameter to be used as the target parameter meeting the parameter optimization condition.

The parameter optimization problem may be directly involved in various application fields. In order to improve the parameter optimization effect, the technical solution of the example of the present application may be used.

In an allocation process of electricity resources and water resources, the allocation result of the electricity resources or water resources in each region may be used as a to-be-processed parameter to initiate a parameter optimization request. The to-be-processed parameter specifically may be the resource quantity corresponding to each region, and for example, may be a load capacity of the region in an electric power scene.

As an example, before determining a target function corresponding to a parameter optimization request in response to the parameter optimization request, it may be included that:
a parameter optimization request initiated by aiming at a to-be-processed parameter of a target resource is received; and
the operation of determining a target function corresponding to a parameter optimization request in response to the parameter optimization request includes:
   a target function corresponding to a processing target of the target resource is determined in response to the parameter optimization request.

It is further included that:
Sampling processing is performed on the to-be-processed parameter for many times to obtain a plurality of candidate parameters.

After the operation that according to the test result respectively corresponding to the at least one candidate parameter, the target parameter meeting the parameter optimum condition is selected from the at least one candidate parameter, it is further included that:
According to a value of the to-be-processed parameter at the target parameter, processing information of the target resource is generated to process the target resource according to the processing information.

The resource element specifically represented by the to-be-processed parameter may be determined according to the processing target of the target resource. For example, when the processing target of the target resource may be the electricity load capacity set for different regions so that the total energy consumption of an electric network is optimum, at this moment, the electricity load capacity of different regions may be the to-be-processed parameter, and the processing target may be the computing function of the total energy consumption of the electric network. The target parameter may be the electricity load capacity of each region under the condition of the optimum obtained total energy consumption of the electric network. According to the value of the to-be-processed parameter at the target parameter, the processing information of the target resource may be generated. That is, the prompt information or setting instructions of the electricity load capacity of each region may be generated according to the value of the processing parameter at the target parameter, and through the setting instructions, the capacity may be set according to the electricity load capacity of each region. The prompt information may be shown to the user so that the user may set the capacity for each region according to the electricity load capacity of each region in the prompt information.

In the field of electronic commerce, the parameter optimization problem may also be involved. By taking the common product recommendation as an example, contents or products recommended to the users are different since the consumption habits, concerned fields and historical browsing behaviors of the user are different. In practical application, in order to improve the click rate of the user, the browsing features such as the consumption habits and the concerned field of the user may be parameterized, different browsing parameters are generated, and the feature of click targets of the user are accurately analyzed through setting a plurality of browsing parameters, so that the target product with higher user attention is found. The plurality of browsing parameters are subjected to parameter sampling and are subjected to the parameter test to determine that the click probability solution of the user may be applicable to the technical solution of the example of the present application to improve the test efficiency.

Therefore, as an example, before determining a target function corresponding to a parameter optimization request in response to the parameter optimization request, it may be included that:
A browsing operation initiated by the target user is detected, and a parameter optimization request of a browsing parameter aiming at the target user is generated.

The operation that the target function corresponding to a parameter optimization request is determined in response to the parameter optimization request includes: the target function corresponding to the visit target of the target user is determined in response to the parameter optimization request.

It is further included that:
Sampling processing is performed on the browsing parameter for many times to obtain a plurality of candidate parameters.

After the operation that according to the test result respectively corresponding to the at least one candidate parameter, the target parameter meeting the parameter optimum condition is selected from the at least one candidate parameter, it is further included that:
According to a value of the browsing parameter at the target parameter, visit recommendation information of the target user is generated.

A target product matched with the visit recommendation information is searched from a product database so as to output the target product to the target user.

By setting corresponding browsing parameters for the browsing feature of the target user, the corresponding browsing parameters are obtained, so that the browsing parameters are subjected to the parameter test to obtain the optimum target parameter. Of course, in practical application, the browsing parameters include one or more sub parameters, and a candidate parameter may be formed after the sampling of the parameter values respectively corresponding to the plurality of sub parameters is completed. After the target parameter is determined, the visit recommendation information of the target user is determined, so that the target product matched with the visit recommendation information may be searched to be output for the target user.

In some examples, the browsing parameters may be the proportions of different browsing features, and the proportions of different browsing features in the product searching process may be determined according to the value of the browsing parameters at the target parameter, so that the plurality of browsing features are subjected to weighted sum according to the respective values in the target parameter, the recommendation feature is obtained, and the recommendation feature may be the visit recommendation information.

In some other examples, the browsing parameters may be proportions of different types of products. That is, products may be respectively recommended for the user from a plurality of types of products. However, the proportions of the products of each type are different. By taking products with major recommendation types of beauty makeup and clothes products as an example, the respective recommendation proportions of the beauty makeup products and clothes products are subjected to parameter optimization, the finally obtained target parameter is 3:7 while the proportion of the beauty makeup product is 3 and the proportion of the clothes products is 7. At this moment, according to the value of the browsing parameters at the target parameter, the generated visit recommendation information may be specifically beauty makeup product and clothes product searching according to a ratio of 3:7, at this moment, 3 parts of beauty makeup products and 7 parts of clothes products matched with the recommendation information are searched from the product database, and are output to the user.

It needs to be noted that the specific application solution of the parameter optimization shown in the present application is only illustrative, and does not constitute the application limitation to this examples of the present application. The example of the present application may be applicable to the parameter optimization scenes of various data models and computing models.

In a possible design, the technical solution of the example of the present application may be configured in a server to form externally available parameter optimization service. As shown in FIG. 6, it is a flowchart of a data processing method according to another example provided by the example of the present application. The method may include the following steps:
601: A processing resource corresponding to a parameter processing interface is determined in response to a request of calling the parameter processing interface.

The following steps are executed by using the processing resource corresponding to the parameter processing interface:
602: A target function corresponding to a parameter optimization request is determined in response to the parameter optimization request.

Before determining a target function corresponding to a parameter optimization request in response to the parameter optimization request, the operation further includes: the parameter optimization request is obtained.

603: In a process of performing a parameter test on any candidate parameter by the target function, a test reduction module is called to judge whether the parameter test meets a reduction condition or not, and to obtain a judging result.

604: If the judging result is that the parameter test meets the reduction condition, the parameter test of the candidate parameter is stopped.

605: If the judging result is that the parameter test does not meet the reduction condition, the parameter test of the candidate parameter is continuously executed to obtain the test result of the candidate parameter.

In a possible design, the following processing steps may be executed by using the processing resource corresponding to the parameter processing interface:
At least one candidate parameter which does not meet the reduction condition is determined, and the test result respectively corresponding to the at least one candidate parameter is obtained; and according to the test result respectively corresponding to the at least one candidate parameter, the target parameter meeting the parameter optimum condition is selected from the at least one candidate parameter.

In a possible design, the following processing steps may be executed by using the processing resource corresponding to the parameter processing interface:
The plurality of test reduction algorithms are obtained in response to the request of calling the test reduction interface.

The target reduction algorithm matched with the parameter test is determined from the plurality of test reduction algorithms.

Whether the intermediate test result of the candidate parameter meets the reduction condition or not is determined in the following manner:
Whether the intermediate test result meets the reduction condition or not is judged according to the target reduction algorithm.

In further another possible design, the test reduction module includes a plurality of test reduction algorithms. The target reduction algorithm is determined in a following manner from the plurality of test reduction algorithms:
The target reduction algorithm matched with the parameter test is searched from the plurality of test reduction algorithms of the test reduction module.

The specific steps executed by the processing resource corresponding to the parameter processing interface in the example of the present application is the same as the processing steps executed by the data processing method as shown in FIG. 1 to FIG. 5, and the specific implementation and technical effects of each technical feature have been described in detail in examples as shown in FIG. 1 to FIG. 5, and are not repeated herein.

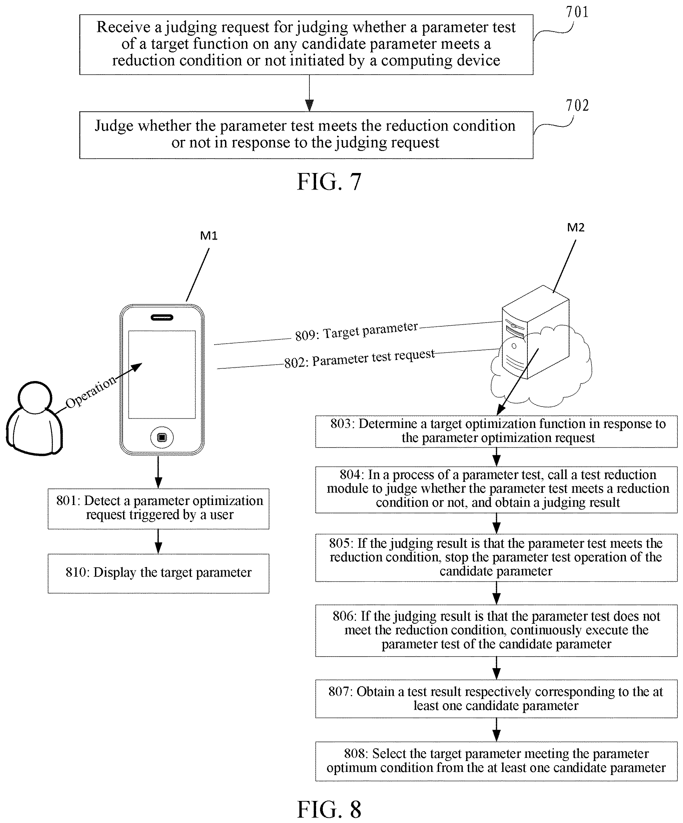

As shown in FIG. 7, it is a flowchart of a data processing method according to another example provided by the example of the present application. The method may include the following steps:
701: A judging request for judging whether a parameter test of a target function on any candidate parameter meets a reduction condition or not initiated by a computing device is received.

The target function is determined when the computing device is in response to the parameter optimization request.

702: Whether the parameter test meets the reduction condition or not is judged in response to the judging request.

The parameter test of the candidate parameter is stopped when the reduction condition is met; and the parameter test of the candidate parameter is continuously executed when the reduction condition is not met so as to obtain a test result of the candidate parameter.

In the example of the present application, when a judging request for judging whether a parameter test of a target function on the candidate parameter meets a reduction condition or not initiated by a computing device is received, whether the parameter test meets the reduction condition or not may be judged in response to the judging request. By judging whether the parameter test meets the reduction condition or not, the parameter test may be accurately monitored to improve the parameter test accuracy.

As an example, whether the parameter test meets the reduction condition or not is specifically judged in the following manner:
The target reduction algorithm matched with the parameter test is determined from the plurality of test reduction algorithms.

Whether the parameter test meets the reduction condition or not is judged according to the target reduction algorithm to generate a judging result.

In some examples, the target reduction algorithm is determined in a following manner from the plurality of test reduction algorithms: the target reduction algorithm matched with the parameter test is searched from the plurality of test reduction algorithms of the test reduction module.

As another possible implementation, the operation that whether the parameter test meets the reduction condition or not is judged according to the target reduction algorithm to generate the judging result may include: based on the target reduction algorithm, whether the intermediate test result of the parameter test meets the reduction condition or not is judged to generate the judging result.

Optionally, it is also included that: a judging request for judging whether a parameter test of the target function on the candidate parameter meets the reduction condition or not is received. The target function is determined when the computing device is in response to a parameter optimization request. Whether the parameter test meets the reduction condition or not is judged in response to the judging request to generate the judging result. The judging result includes that the parameter test meets the reduction condition or the parameter test does not meet the reduction condition. The parameter test of the candidate parameter is stopped when the reduction condition is met, and the parameter test of the candidate parameter is continuously executed when the reduction condition is not met so as to obtain the test result of the candidate parameter.

Optionally, the operation that whether the parameter test meets the reduction condition or not is judged in response to the judging request may include: the target reduction algorithm provided by the computing device is obtained in response to the judging request, and whether the parameter test meets the reduction condition or not is judged based on the target reduction algorithm.

Optionally, the operation that whether the parameter test meets the reduction condition or not is judged in response to the judging request may include: the target reduction algorithm matched with the parameter test is searched from the plurality of test reduction algorithms of the test reduction module in response to the judging request, and whether the parameter test meets the reduction condition or not is judged based on the target reduction algorithm.

Optionally, the operation further includes: the intermediate test result of the candidate parameter is obtained in response to the judging request, and whether the intermediate test result meets the reduction condition or not is judged. The operation that whether the intermediate test result meets the reduction condition or not is judged includes: the target reduction algorithm matched with the parameter test in the plurality of test reduction algorithms is determined, and whether the intermediate test result meets the reduction condition or not is judged according to the target reduction algorithm to generate the judging result.

Parts of steps in the example as shown in FIG. 7 are the same as parts of steps in the example as shown in FIG. 1, etc., so that the specific implementation and technical effects of each step are not repeated herein for considering the description simplicity.

For convenient understanding, an application example of the example of the present application will be illustrated in detail by taking a hyperparameter formed by the network depth, the number of iteration times, the quantity of nerve cells in each layer of the machine learning model as the to-be-optimized parameter and taking the data processing method provided by the cloud server performing interaction with a user device as an example.

Referring to FIG. 8, in practical application, the user device, for example, may be terminal devices such as a mobile terminal and an Internet of Things (IoT) terminal, and may interact with the user. The user device can be communicated with a server capable of optimizing the hyperparameter. The user device being a mobile terminal M1 and the server being a cloud server M2 are taken as an example. 801 The mobile terminal M1 may detect the parameter optimization request of the hyperparameter formed by the network depth, the number of iteration times, and the quantity of nerve cells in each layer of the machine learning model and triggered by the user. 802 The mobile terminal M1 may send the parameter optimization request to the server M2. 803 The cloud server M2 may determine the target function in response to the parameter optimization request.

804 Then, in a process of performing a parameter test on any candidate parameter by the target function, the cloud server M2 may call a test reduction module to judge whether the parameter test meets a reduction condition or not, and to obtain the judging result. 805 If the judging result is that the parameter test meets the reduction condition, the parameter test of the candidate parameter is stopped. 806 If the judging result is that the parameter test does not meet the reduction condition, the parameter test of the candidate parameter is continuously executed to obtain the test result of the candidate parameter. The time loss of the parameter time may be reduced by performing interruption judgment on the parameter test of the candidate parameter.

807 In some examples, the cloud server M2 may further determine at least one candidate parameter which does not meet the reduction condition, and obtain the test result respectively corresponding to the at least one candidate parameter. 808 According to the test result respectively corresponding to the at least one candidate parameter, the target parameter meeting the parameter optimum condition is selected from the at least one candidate parameter.

809 If the cloud server M2 executes the selection of the target parameter meeting the parameter optimum condition, the target parameter obtained through final selection may be sent to the user side M1. 810 After the mobile terminal M1 receives the target parameter, the target parameter may be displayed and output. The output manner of the target parameter may include various forms, such as the output manner of data, pages, information or messages. The specific output manner of the target parameter is not too much limited in the example of the present application.

In practical application, the target parameter obtained by the parameter optimization method provided by the example of the present application may be directly applied to a model training scene of a machine learning model. For example, when the parameter optimized by the user is the hyperparameter, the obtained optimum target parameter is the target hyperparameter. The machine learning model may be built by using the target hyperparameter, the training data is used to train the machine learning model to obtain the model parameter of the machine learning model built by using the target hyperparameter, and the obtained machine learning model has a better use effect, for example, in the field of face recognition, the recognition accuracy of the face recognition model formed by the optimum hyperparameter is higher.

The technical solution of the example of the present application may be applied to various fields of artificial intelligence interaction, data search, content recommendation, click rate prediction, intelligent factory, industrial control, etc. The applicability, particularly in the field of content recommendation, such as the content recommendation in the fields of electronic commerce, live video, social interaction and online education and the fields of resource allocation such as financial product allocation, electricity resources, water resources and supply chain allocation is higher.

For convenient understanding, the example of the present application is described in detail by taking the problem cases in the following practical field scenes as an example.

Electronic commerce field. The application scenes of feature searching, and product recommendation, content recommendation, advertisement click rate calculation, and the like in the live video scene in the electronic commerce field are most common. The example of the present application performs example deployment by taking the content recommendation scene as an example. A common recommendation process in a recommendation scene may be performing parameterization setting on elements of the selected scene to obtain a plurality of parameters generating influence on the scene, marking different features of the scene by using a plurality of parameters and performing feature assignment on the plurality of parameters to obtain a candidate parameter. Based on the specific application requirements of the scene, the target function matched with the scene is selected, and the candidate parameter is input into the target function for the parameter test when the user initiates the parameter optimization request of the candidate parameter. In a process of performing a parameter test on any candidate parameter by the target function, the test reduction module is called to judge whether the parameter test meets a reduction condition or not, and to obtain a judging result. If the judging result is that the parameter test meets the reduction condition, the parameter test of the candidate parameter is stopped. If the judging result is that the parameter test does not meet the reduction condition, the parameter test of the candidate parameter is continuously executed to obtain the test result of the candidate parameter.

By taking a click word recommendation scene as an example, when the user clicks a query box in an APP (Application), the system may recommend parts of query words for the user. The purpose of recommending the query words for the user is to mine the potential purchasing requirements of the user, increase the use stickiness of the user and improve the total commodity trading volume. A following architecture is used in a query system, a deep learning Encode-Decode network, i.e., the target network, is combined, and the recommendation of the query words is predicted. It is supposed that the quantity of the query words is subjected to optimum parameter selection. In the prior art, the optimum parameter value of the parameter formed by the quantity of the query words is manually set according to human experiences. By using the data processing method provided by the present application, the quantity of the query words is automatically subjected to the parameter test according to the above parameter optimization process. Then, the at least one quantity of the query words meeting the reduction condition is obtained, and the test result respectively corresponding to the at least one quantity of the query words is obtained. According to the test result respectively corresponding to the at least one quantity of the query words, the target quantity of the query words meeting the parameter optimum condition is selected from the at least one quantity of the query words. The obtained quantity of target query words may be used as the quantity of the optimum query words. By performing interruption monitoring on the parameter test of the quantity of query words, the invalid test on the current quantity of query words may be avoided, and the optimization efficiency of the quantity of query words is improved.

(2) Social interaction field. In the social interaction field, the content recommendation to social users and material recommendation to students are very common. The recommendation in the social interaction field is generally that social users browse social applications, and social interaction contents interested by the users are shown in display interfaces of the applications. Generally, for the recommendation in the social interaction field, options of the historical browsing behaviors, concerned fields, user information, etc. of the user form feature parameters, and different parameters may be formed by combinations of different options. During parameter determination, the feature information may be generated. Contents related to the feature information are searched based on the feature information concerned by the user. The searching for the contents related to the feature information may be used as a target function. In order to find the contents interested by the social user, the quantity and the type of the parameters may be optimized to obtain the accurate social user contents.

The technical solution of the example of the present application may be configured in a cloud server. The parameter optimization request may be initiated by the operation and maintenance staff. The operation and maintenance staff may set the plurality of parameters and the plurality of parameters formed by the user related information, then, the candidate parameters is continuously generated, and next, each of the candidate parameters is subjected to the parameter test. In a process of performing the parameter test on any candidate parameter by the target function, the test reduction module is called to judge whether the parameter test meets a reduction condition or not, and to obtain a judging result. For example, the searching quantity of the parameter test may be monitored. When 1000 contents are searched, if the quantity of the contents reaching more than 60% similarity to the current set feature information exceeds a preset quantity threshold, it may be determined that the parameter test does not meet the reduction condition. If the quantity does not exceed the preset quantity threshold, it may be determined that the parameter test meets the reduction condition.

If the judging result is that the parameter test meets the reduction condition, the parameter test of the candidate parameter is stopped. If the judging result is that the parameter test does not meet the reduction condition, the parameter test of the candidate parameter is continuously executed to obtain the test result of the candidate parameter. Through the parameter test reduction by using the test reduction module, the parameter test efficiency may be improved, and the optimum feature option of the user is further enabled to be fast obtained.

(3) Financial field. The stock index simulation is a very important problem. The stock index simulation problems based on models of linear regression, support vector machines (SVM), long short-term memory (LSTM), etc. are common. Before the model is used, a proper model needs to be built at first. In a model training process, various hyperparameters may be involved, for example, time step length (time_step), feature dimension (feature_dim), hidden figure, and the like in LSTM. Additionally, contextual features such as market macro factors, micro-factors, incidents, etc. are also involved. These contextual features may influence the parameter selection. By using the technology of the present application, after each parameter is subjected to parameter value setting for many times, the candidate parameter formed by the parameter value of each parameter may be obtained, and each candidate parameter is subjected to the parameter test, so that the optimum target parameter may be selected from the candidate parameters.

In order to improve the parameter optimization efficiency of the candidate parameters, the target function may be used for performing the parameter test on the candidate parameter formed after the valuing of the hyperparameters. In a process of performing the parameter test on any candidate parameter by the target function, the test reduction module is called to judge whether the parameter test meets the reduction condition or not, and to obtain the judging result. If the judging result is that the parameter test meets the reduction condition, the parameter test of the candidate parameter is stopped. If the judging result is that the parameter test does not meet the reduction condition, the parameter test of the candidate parameter is continuously executed to obtain the test result of the candidate parameter. At least one candidate parameter meeting the reduction condition is obtained, and the test result respectively corresponding to the at least one candidate parameter is obtained; and according to the test result respectively corresponding to the at least one candidate parameter, the target parameter meeting the parameter optimum condition is selected from the at least one candidate parameter. By using the obtained target parameter, the machine learning model corresponding to the index simulation problem may be built, and model training is performed to obtain the model parameter. Then, the machine learning model obtained through training is used to perform simulation computation on data such as an actual stock index root mean squared error (RMSE) difference value of the index simulation problem.

(4) Resource allocation field by taking electricity resource allocation as an example. The electricity resource allocation may generally involve with various regions. Each region may be represented by corresponding parameters. These parameters may respectively allocate a certain proportion of resources, and the resource allocation may influence information such as region economy, population and environment.

The technical solution of the example of the present application may be applied to the problem of dynamic pricing in the electricity market and electricity economic load distribution. The specific application fields of the electric power system will be mainly illustrated in detail hereafter.

For the problem of dynamic pricing in the electricity market, the user type and the electricity consumption have key influence on the electricity market. Parameters such as the user type and the electricity consumption may be used as to-be-optimized parameters to be sampled, and candidate parameters may be obtained. Through the setting of the candidate parameters, the earning/cost of the electric power system may be used as a final optimization target to determine the target function corresponding to the optimization target. The candidate parameter may be subjected to the parameter test by using the target function to obtain a target value of the system earning/cost. The optimum target value is obtained by continuously performing the parameter test of the candidate parameters. In the parameter test process, the technical solution of the example of the present application may be used for test reduction on the candidate parameter to reduce the parameter test of the candidate parameter with poor estimation result and to improve the parameter optimization efficiency.

For the problem of electricity economic load distribution, an electricity supplier may provide electricity resources for a plurality of regions, the electricity load capacity of each region may be used as a candidate parameter, and the electricity grid total energy consumption may be used as output of the target function. By using the technical solution of the example of the present application, the respective electricity load capacity of a plurality of regions may be set to obtain a candidate parameter, and the candidate parameter is subjected to the parameter test through the target function to obtain the computing result of the candidate parameter. The target function may be a nonlinear constrained relationship between the electricity load capacity and the electricity grid total energy consumption, the target function may be expressed in a black box optimization algorithm form, and the black box target function is obtained. Then, the parameter test is continuously performed on the electricity load capacity of each region to obtain the optimum load capacity distribution strategies. During the parameter test on the electricity load capacity of each region, the technical solution of the example of the present application may be used. The parameter test is subjected to test reduction to reduce the parameter test of the candidate parameter with poor estimation result and to improve the parameter optimization efficiency.

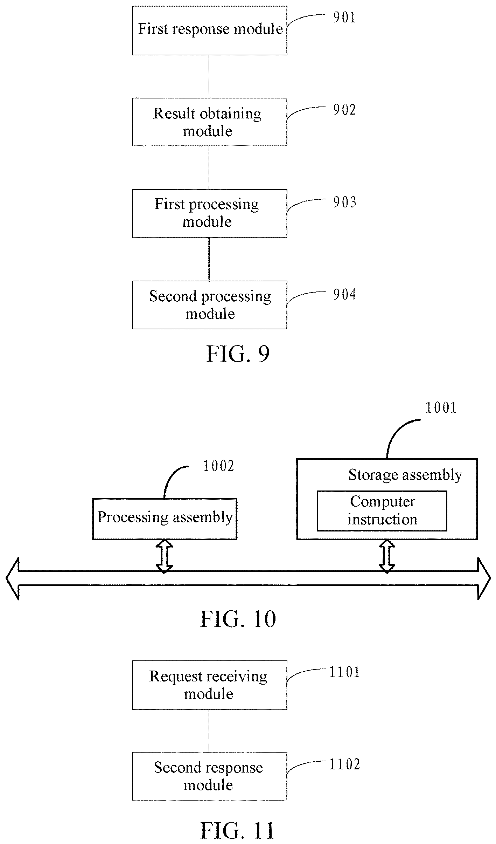

As shown in FIG. 9, it is a schematic structural diagram of a data processing device according to an example provided by the example of the present application. The device may include:
a first response module 901, configured to determine a target function corresponding to a parameter optimization request in response to the parameter optimization request;
a result obtaining module 902, configured to call a test reduction module in a process of performing a parameter test on any candidate parameter by the target function to judge whether a parameter test meets a reduction condition or not and to obtain a judging result;
a first processing module 903, configured to stop the parameter test of the candidate parameter if the judging result is that the parameter test meets the reduction condition; and
a second processing module 904, configured to continuously execute the parameter test of the candidate parameter to obtain the test result of the candidate parameter if the judging result is that the parameter test does not meet the reduction condition.

In the example of the present application, after the target function corresponding to the parameter optimization request of the candidate parameter is determined in response to the parameter optimization request, in a process of performing a parameter test on any candidate parameter by the target function, a test reduction module may be called to judge whether a parameter test meets a reduction condition or not, and to obtain a judging result. If the judging result of the candidate parameter is that the candidate parameter meets the reduction condition, the parameter test of the candidate parameter is stopped. If the judging result is that the parameter test does not meet the reduction condition, the parameter test of the candidate parameter may be continuously executed to obtain the test result corresponding to the candidate parameter. The parameter test of the candidate parameter is monitored to confirm whether the candidate parameter needs to completely execute the whole parameter test or not so as to improve the test efficiency of the candidate parameter, reduce the unnecessary candidate parameter test process and improve the parameter optimization efficiency.

As an example, the test reduction module includes a plurality of test reduction algorithms.

The result obtaining module may include:
The device may further include: a result obtaining unit, configured to call the target reduction algorithm in the plurality of test reduction algorithms of the test reduction module to judge whether the parameter test meets a reduction condition or not in a process of performing a parameter test on any candidate parameter by the target function, and to obtain a judging result.

In some examples, the device further includes:
an algorithm matching module, configured to search the target reduction algorithm matched with the parameter test from the plurality of test reduction algorithms of the test reduction module.

As a possible implementation, the algorithm matching module may include:
a first determining unit, configured to determine first test information corresponding to the parameter test of the candidate parameter;
a first obtaining unit, configured to obtain second test information respectively associated with the plurality of test reduction algorithms;
an information matching unit, configured to search target test information matched with the first test information from the second test information respectively corresponding to the plurality of test reduction algorithms; and
an algorithm determining unit, configured to determine the test reduction algorithm corresponding to the target test information as the target reduction algorithm.

As a possible implementation, the first test information includes: a parameter test type.

The information matching unit may include:
a first searching sub unit, configured to search the target test information matched with the parameter test type of the first test information from the second test information respectively corresponding to the plurality of test reduction algorithms.

In a possible design, the parameter test type includes: a serial test type and a parallel test type.

The first searching sub unit may be specifically configured to:
if the parameter test type of the candidate parameter is the serial test type, determine the target test information with the serial test type in the second test information respectively corresponding to the plurality of test reduction algorithms; or
if the parameter test type of the candidate parameter is the parallel test type, determine the target test information with the parallel test type in the second test information respectively corresponding to the plurality of test reduction algorithms.

As another possible implementation, the first test information includes: a parameter test step.

The information matching unit may include:
a second searching sub unit, configured to search the target test information matched with the parameter test stage of the first test information from the second test information respectively corresponding to the plurality of test reduction algorithms.

In a possible design, the parameter test stage includes: an early test stage, a middle test stage and a final test stage.

The second searching sub unit may be specifically configured to:
if the parameter test stage of the candidate parameter is the early test stage, determine the target test information with the early test stage in the second test information respectively corresponding to the plurality of test reduction algorithms; or
if the parameter test stage of the candidate parameter is the middle test stage, determine the target test information with the middle test stage in the second test information respectively corresponding to the plurality of test reduction algorithms; or
if the parameter test stage of the candidate parameter is the final test stage, determine the target test information with the final test stage in the second test information respectively corresponding to the plurality of test reduction algorithms.

As another possible implementation, the first test information may further include: a parameter test stage and a parameter test type.

The information matching unit may include:
a third searching sub unit, configured to determine target test information matched with the parameter test type and the parameter test stage at the same time from the second test information respectively corresponding to the plurality of test reduction algorithms.

In some examples, the result obtaining module may include:
a second obtaining unit, configured to call a test reduction module in a process of performing a parameter test on any candidate parameter by the target function to judge whether an intermediate test result of the parameter test meets a reduction condition or not and to obtain a judging result.

The second obtaining unit may be further specifically configured to call the target reduction algorithm in the plurality of test reduction algorithms of the test reduction module to judge whether an intermediate test result of the parameter test meets a reduction condition or not in a process of performing a parameter test on any candidate parameter by the target function, and to obtain a judging result.

The target reduction algorithm includes a historical estimation algorithm.

The second obtaining unit may include:
a result estimation sub unit, configured to estimate an estimated test result corresponding to the intermediate test result according to a historical intermediate result and a historical test result respectively corresponding to a plurality of historical parameters; and
a first judging sub unit, configured to judge whether the whether the estimated test result is matched with a result threshold or not; if NO, determine that the intermediate test result meets the reduction condition; and if YES, determine that the intermediate test result does not meet the reduction condition.

In some examples, the target reduction algorithm includes a computing comparison algorithm.

The second obtaining unit may include:
a reference obtaining sub unit, configured to determine an intermediate reference value corresponding to a monitoring node for obtaining the intermediate test result in the parameter test process; and
a second judging sub unit, configured to judge whether the whether the intermediate reference value meets a preset reference threshold or not; if NO, determine that the intermediate test result meets the reduction condition; and if YES, determine that the intermediate test result does not meet the reduction condition.

In a possible design, the plurality of test reduction algorithms include a self-defined reduction algorithm set by a target user.

The algorithm matching module may include:
an algorithm matching unit, configured to determine the self-defined reduction algorithm as the target reduction algorithm if the self-defined reduction algorithm set by a target user exists in the plurality of test reduction algorithms.

The device may further include: an algorithm storage module, configured to control the test reduction module to store the self-defined reduction algorithm based on the self-defined reduction algorithm set by the target user.

Optionally, the algorithm matching module may specifically include:
a tips generation sub unit, configured to generate prompt information showing existence of the self-defined reduction algorithm if the self-defined reduction algorithm set by a target user exists in the plurality of test reduction algorithms;
an algorithm showing sub unit, configured to show the prompt information to the target user so that the target user confirms whether the self-defined algorithm is applicable to the parameter test or not; and
an algorithm determining sub unit, configured to determine the self-defined reduction algorithm as the target reduction algorithm if the target user executes a confirming operation aiming at the self-defined reduction algorithm applicable to the parameter test.

As further another example, the device further includes:
a parameter determining module, configured to determine at least one candidate parameter which does not meet the reduction condition in the plurality of candidate parameters, and obtain the test result respectively corresponding to the at least one candidate parameter; and
a parameter selecting module, configured to select the target parameter meeting the parameter optimum condition from the at least one candidate parameter according to the test result respectively corresponding to the at least one candidate parameter.

As an example, the device may further include:
a resource request module, configured to receive a parameter optimization request initiated by aiming at a to-be-processed parameter of a target resource.

The first response module may include:
a first response unit, configured to determine a target function corresponding to a processing target of the target resource in response to the parameter optimization request.

The device may further include:
a first sampling module, configured to perform sampling processing on the to-be-processed parameter for many times to obtain a plurality of candidate parameters; and
a resource processing module, configured to generate processing information of the target resource according to a value of the to-be-processed parameter at the target parameter to process the target resource according to the processing information.

As another example, the device may further include:
a browsing response module, configured to detect a browsing operation initiated by the target user, and generate a parameter optimization request of a browsing parameter aiming at the target user.

The first response module may include:
a second response unit, configured to determine a target function corresponding to a visit target of the target user in response to the parameter optimization request.

The device may further include:
a second sampling module, configured to perform sampling processing on the browsing parameter for many times to obtain a plurality of candidate parameters;
an information generation module, configured to generate visit recommendation information of the target user according to a value of the browsing parameter at the target parameter; and
a product matching module, configured to search a target product matched with the visit recommendation information from a product database so as to output the target product to the target user.

The data processing device as shown in FIG. 9 may execute the data processing method of the example as shown in FIG. 1, so its implementation principle and technical effects are not repeated herein. The specific implementations of each step executed by processing assemblies in the examples have been described in detail in the examples involving with the method, and will not be described in detail herein.

In practical application, a data processing device as shown in FIG. 10 may be a computing device. Referring to FIG .10, it is a schematic structural diagram of a computing device according to an example provided by the example of the present application. The device may include: a storage assembly 1001 and a processing assembly 1002. The storage assembly 1001 is configured to store one or more computer instructions. The one or more computer instructions are called by the processing assembly 1002 to execute a hyperparameter optimization method according to examples as shown in FIG. 1, etc.

The processing assembly 1002 may include one or more processors to execute computer instructions to complete all or parts of the steps of the above method. Of course, the processing assembly may be one or more application-specific integrated circuits (ASICs), digital signal processors (DSPs), digital signal processing devices (DSPDs), programmable logic devices (PLDs), field-programmable gate arrays (FPGAs), controllers, micro controllers, microprocessors or other electronic elements, and are configured to execute the above method.

The storage assembly 1001 is configured to store various types of data to support operations at a terminal. The storage assembly may be realized by any type of volatile or nonvolatile storage devices or a combination thereof, such as a static random access memory (SRAM), an electrically erasable programmable read-only memory (EEPROM), an erasable programmable read-only memory (EPROM), a programmable read only memory (PROM), a read-only memory (ROM), a magnetic memory, a flash memory, a magnetic disk or a compact disc.

Of course, the computing device necessarily may include other components, such as an input/output interface, a communication assembly, etc. The input/output interface is an interface provided between the processing assembly and a peripheral interface module. The peripheral interface module may be an output device, an input device, etc. The communication assembly is configured to be convenient for wired or wireless communication, etc. between the computing device and other devices.

Additionally, the example of the present application also provides a computer readable storage medium. The storage medium may store one or more computer instructions. When being executed, the one or more computer instructions are used to realize any data processing method in the example of the present application.

As shown in FIG. 11, it is a schematic structural diagram of a test reduction device according to another example provided by the example of the present application. The device may include:
a request receiving module 1101, configured to receive a judging request for judging whether a parameter test of a target function on any candidate parameter meets a reduction condition or not initiated by a computing device, where
the target function is determined when the computing device is in response to the parameter optimization request; and
a second response module 1102, configured to judge whether the parameter test meets the reduction condition or not in response to the judging request, where
the parameter test of the candidate parameter is stopped when the reduction condition is met, and the parameter test of the candidate parameter is continuously executed when the reduction condition is not met so as to obtain a test result of the candidate parameter.

As an example, the device further includes:
a second determining module, configured to determine the target reduction algorithm matched with the parameter test from the plurality of test reduction algorithms; and
a third judging module, configured to judge whether the parameter test meets the reduction condition or not according to the target reduction algorithm to generate a judging result.

Optionally, the target reduction algorithm is determined in a following manner from the plurality of test reduction algorithms: the target reduction algorithm matched with the parameter test is searched from the plurality of test reduction algorithms of the test reduction module.

In some examples, the third judging module may be specifically configured to: judge whether the intermediate test result of the parameter test meet the reduction condition or not according to the target reduction algorithm to generate a judging result.

The test reduction device as shown in FIG. 11 may execute the data processing method of the example as shown in FIG. 7, so its implementation principle and technical effects are not repeated herein. The specific implementations of each step executed by processing assemblies in the examples have been described in detail in the examples involving with the method, and will not be described in detail herein.

In practical application, the test reduction device as shown in FIG. 11 may be a test reduction device. Referring to FIG .12, it is a schematic structural diagram of a test reduction device according to an example provided by the example of the present application. The device may include: a storage assembly 1201 and a processing assembly 1202. The storage assembly 1201 is configured to store one or more computer instructions. The one or more computer instructions are called by the processing assembly 1202 to execute a data processing method according to examples as shown in FIG. 7, etc.

The processing assembly 1202 may include one or more processors to execute computer instructions to complete all or parts of the steps of the above method. Of course, the processing assembly may be one or more application-specific integrated circuits (ASICs), digital signal processors (DSPs), digital signal processing devices (DSPDs), programmable logic devices (PLDs), field-programmable gate arrays (FPGAs), controllers, micro controllers, microprocessors or other electronic elements, and are configured to execute the above method.

The storage assembly 1201 is configured to store various types of data to support operations at a terminal. The storage assembly may be realized by any type of volatile or nonvolatile storage devices or a combination thereof, such as a static random access memory (SRAM), an electrically erasable programmable read-only memory (EEPROM), an erasable programmable read-only memory (EPROM), a programmable read only memory (PROM), a read-only memory (ROM), a magnetic memory, a flash memory, a magnetic disk or a compact disc.

Of course, the computing device necessarily may include other components, such as an input/output interface, a communication assembly, etc. The input/output interface is an interface provided between the processing assembly and a peripheral interface module. The peripheral interface module may be an output device, an input device, etc. The communication assembly is configured to be convenient for wired or wireless communication, etc. between the computing device and other devices.

Additionally, the example of the present application also provides a computer readable storage medium. The storage medium may store one or more computer instructions. When being executed, the one or more computer instructions are used to realize any data processing method in the example of the present application.

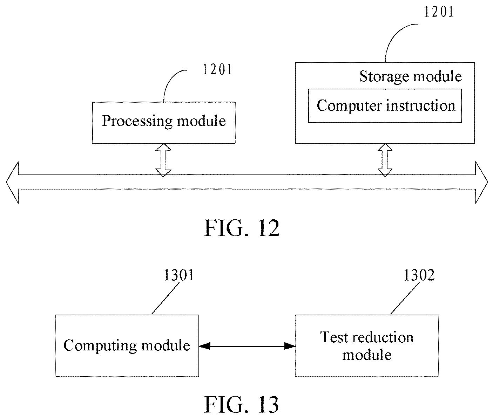

As shown in FIG. 13, it is a schematic structural diagram of a data processing system according to another example provided by the example of the present application. The system may include: a computing module 1301 and a test reduction module 1302.

The computing module is configured to determine a target function corresponding to a parameter optimization request in response to the parameter optimization request; in a process of performing a parameter test on any candidate parameter by the target function, generate a judging request to judge whether the parameter test meets a reduction condition or not; send the judging request to the test reduction module; determine a judging result corresponding to the judging request; if the judging result is that the parameter test meets the reduction condition, stop the parameter test of the candidate parameter; and if the judging result is that the parameter test does not meet the reduction condition, continuously execute the parameter test of the candidate parameter to obtain the test result of the candidate parameter.

The test reduction module is configured to obtain the judging request sent by the computing module; and judge whether the parameter test meets the reduction condition or not in response to the judging request.

As an example, the operation that the computing module generates a judging request to judge whether the parameter test meets a reduction condition or not in a process of performing a parameter test on any candidate parameter by the target function specifically includes:
In a process of performing a parameter test on any candidate parameter by the target function, the judging request to judge whether the parameter test meets a reduction condition or not is generated based on the target reduction algorithm in the plurality of test reduction algorithms of the test reduction module.

The computing module in examples of the present application may be the computing device in the above examples. The test reduction module may be specifically the test reduction device in the above examples. The specific contents executed by the computing model and the test reduction module and the technical effects have been described in detail in the above examples, and are not repeated herein.

The example of the device described above are only illustrative, the unit illustrated as a separation component can be or cannot be physically separated, and a component displayed as a unit can be or cannot be a physical unit. That is, it can be located in one place, or can be distributed on a plurality of network units. Partial or total modules therein can be selected to achieve the objective of the scheme of examples of the present application according to the practical requirements. Those of ordinary skill in the art can understand and practice without any inventive effort.

Through the above descriptions on the examples, those skilled in the art may clearly know that each implementation may be realized with the help with necessary universal hardware platform, and certainly, may be realized in a hardware and software combination manner. Based on such understanding, the technical solution may be embodied in a form of a computer program product essentially or partially in a prior-art-contributive part. The present application may adopt a computer program product form implemented on one or more computer-usable storage media (including but not limited to a disk memory, CD-ROM, an optical memory, etc.) having computer-usable program code.

Finally, it should be noted that the above examples are merely illustrative of the technical solutions of the present application, but are not intended to limit the present application. Although the present application has been described in detail with the reference to the foregoing examples, those of ordinary skill in the art should understand that: the technical solutions of each of the above examples can still be modified, or some or all of the technical features in the above examples can be equivalently replaced. These modifications or substitutions do not depart from the spirit and scope of the technical solutions of each example of the present application for nature of the respective technical solutions.

## Claims

1. A data processing method, comprising:
determining a target function corresponding to a parameter optimization request in response to the parameter optimization request;
in a process of performing a parameter test on any candidate parameter by the target function, calling a test reduction module to judge whether the parameter test meets a reduction condition or not, and obtaining a judging result of the candidate parameter;
if the judging result is that the parameter test meets the reduction condition, stopping the parameter test of the candidate parameter; and
if the judging result is that the parameter test does not meet the reduction condition, continuously executing the parameter test of the candidate parameter to obtain the test result of the candidate parameter.

2. The method according to claim 1, wherein the test reduction module comprises a plurality of test reduction algorithms; and
the operation of in a process of performing a parameter test on any candidate parameter by the target function, calling a test reduction module to judge whether the parameter test meets a reduction condition or not, and obtaining a judging result comprises:
in a process of performing a parameter test on any candidate parameter by the target function, calling a target reduction algorithm in the plurality of test reduction algorithms of the test reduction module to judge whether the parameter test meets a reduction condition or not, and obtaining the judging result.

3. The method according to claim 2, wherein the target reduction algorithm is determined in a following manner from the plurality of test reduction algorithms:
searching the target reduction algorithm matched with the parameter test from the plurality of test reduction algorithms of the test reduction module.

4. The method according to claim 3, wherein the operation of searching the target reduction algorithm matched with the parameter test from the plurality of test reduction algorithms of the test reduction module comprises:
determining first test information corresponding to the parameter test of the candidate parameter;
obtaining second test information respectively associated with the plurality of test reduction algorithms;
searching target test information matched with the first test information from the second test information respectively corresponding to the plurality of test reduction algorithms; and
determining the test reduction algorithm corresponding to the target test information as the target reduction algorithm.

5. The method according to claim 4, wherein the first test information comprises: a parameter test type; and
the operation of searching target test information matched with the first test information from the second test information respectively corresponding to the plurality of test reduction algorithms comprises:
searching the target test information matched with the parameter test type of the first test information from the second test information respectively corresponding to the plurality of test reduction algorithms.

6. The method according to claim 5, wherein the parameter test type comprises: a serial test type and a parallel test type; and
the operation of searching the target test information matched with the parameter test type of the first test information from the second test information respectively corresponding to the plurality of test reduction algorithms comprises:
if the parameter test type of the candidate parameter is the serial test type, determining the target test information with the serial test type in the second test information respectively corresponding to the plurality of test reduction algorithms; or
if the parameter test type of the candidate parameter is the parallel test type, determining the target test information with the parallel test type in the second test information respectively corresponding to the plurality of test reduction algorithms.

7. The method according to claim 4, wherein the first test information comprises: a parameter test stage; and
the operation of searching target test information matched with the first test information from the second test information respectively corresponding to the plurality of test reduction algorithms comprises:
searching target test information matched with the parameter test stage of the first test information from the second test information respectively corresponding to the plurality of test reduction algorithms.

8. The method according to claim 4, wherein the first test information comprises: a parameter test stage and a parameter test type; and
the operation of searching target test information matched with the first test information from the second test information respectively corresponding to the plurality of test reduction algorithms comprises:
determining target test information matched with the parameter test type and the parameter test stage at the same time from the second test information respectively corresponding to the plurality of test reduction algorithms.

9. The method according to claim 2, wherein the plurality of test reduction algorithms comprise a self-defined reduction algorithm set by a target user; and
the target reduction algorithm is further determined in a following manner from the plurality of test reduction algorithms:
if the self-defined reduction algorithm set by a target user exists in the plurality of test reduction algorithms, determining the self-defined reduction algorithm as the target reduction algorithm.

10. The method according to claim 9, further comprising:
based on the self-defined reduction algorithm set by the target user, controlling the test reduction module to store the self-defined reduction algorithm.

11. The method according to claim 9, wherein the operation of if the self-defined reduction algorithm set by a target user exists in the plurality of test reduction algorithms, determining the self-defined reduction algorithm as the target reduction algorithm comprises:
if the self-defined reduction algorithm set by a target user exists in the plurality of test reduction algorithms, generating prompt information showing existence of the self-defined reduction algorithm;
showing the prompt information to the target user so that the target user confirms whether the self-defined algorithm is applicable to the parameter test or not; and
if the target user executes a confirming operation aiming at the self-defined reduction algorithm applicable to the parameter test, determining the self-defined reduction algorithm as the target reduction algorithm.

12. The method according to claim 1, wherein the operation of in a process of performing a parameter test on any candidate parameter by the target function, calling a test reduction module to judge whether the parameter test meets a reduction condition or not, and obtaining a judging result comprises:
in a process of performing a parameter test on any candidate parameter by the target function, calling the test reduction module to judge whether an intermediate test result of the parameter test meets a reduction condition or not, and obtaining the judging result.

13. The method according to claim 12, wherein the operation of in a process of performing a parameter test on any candidate parameter by the target function, calling the test reduction module to judge whether an intermediate test result of the parameter test meets a reduction condition or not, and obtaining the judging result comprises:
in a process of performing a parameter test on any candidate parameter by the target function, calling the target reduction algorithm in the plurality of test reduction algorithms of the test reduction module to judge whether an intermediate test result of the parameter test meets a reduction condition or not, and obtaining the judging result.

14. The method according to claim 13, wherein the target reduction algorithm comprises a historical estimation algorithm; and
the historical estimation algorithm judges whether the intermediate test result meets the reduction condition or not specifically in the following manner:
according to a historical intermediate result and a historical test result respectively corresponding to a plurality of historical parameters, estimating an estimated test result corresponding to the intermediate test result;
judging whether the estimated test result is matched with a result threshold or not;
if NO, determining that the intermediate test result meets the reduction condition; and
if YES, determining that the intermediate test result does not meet the reduction condition.

15. The method according to claim 3, wherein the target reduction algorithm comprises:
a computing comparison algorithm; and
the computing comparison algorithm judges whether the intermediate test result meets the reduction condition or not specifically in the following manner:
determining an intermediate reference value corresponding to a monitoring node for obtaining the intermediate test result in the parameter test process;
judging whether the intermediate reference value meets a preset reference threshold or not;
if NO, determining that the intermediate test result meets the reduction condition; and
if YES, determining that the intermediate test result does not meet the reduction condition.

16. The method according to claim 1, further comprising: determining at least one candidate parameter which does not meet the reduction condition in the plurality of candidate parameters, and obtaining the test result respectively corresponding to the at least one candidate parameter; and
according to the test result respectively corresponding to the at least one candidate parameter, selecting a target parameter meeting the parameter optimum condition from the at least one candidate parameter.

17. The method according to claim 16, further comprising:
receiving a parameter optimization request initiated by aiming at a to-be-processed parameter of a target resource; and
the operation of determining a target function corresponding to a parameter optimization request in response to the parameter optimization request comprises:
determining a target function corresponding to a processing target of the target resource in response to the parameter optimization request;
further comprising:
performing sampling processing on the to-be-processed parameter for a plurality of times to obtain a plurality of candidate parameters; and
after the operation of according to the test result respectively corresponding to the at least one candidate parameter, selecting the target parameter meeting the parameter optimum condition from the at least one candidate parameter, further comprising:
according to a value of the to-be-processed parameter at the target parameter, generating processing information of the target resource to process the target resource according to the processing information.

18. The method according to claim 16, further comprising:
detecting a browsing operation initiated by the target user, and generating a parameter optimization request of a browsing parameter aiming at the target user; and
the operation of determining a target function corresponding to a parameter optimization request in response to the parameter optimization request comprises:
determining a target function corresponding to a visit target of the target user in response to the parameter optimization request;
further comprising:
performing sampling processing on the browsing parameter for a plurality of times to obtain a plurality of candidate parameters; and
after the operation of according to the test result respectively corresponding to the at least one candidate parameter, selecting the target parameter meeting the parameter optimum condition from the at least one candidate parameter, further comprising:
according to a value of the browsing parameter at the target parameter, generating visit recommendation information of the target user; and
searching a target product matched with the visit recommendation information from a product database so as to output the target product to the target user.

19. A data processing method, comprising:
determining a processing resource corresponding to a parameter processing interface in response to a request of calling the parameter processing interface;
and executing the following steps by using the processing resource corresponding to the parameter processing interface:
determining a target function corresponding to a parameter optimization request in response to the parameter optimization request;
in a process of performing a parameter test on any candidate parameter by the target function, calling a test reduction module to judge whether the parameter test meets a reduction condition or not, and obtaining a judging result;
if the judging result is that the parameter test meets the reduction condition, stopping the parameter test of the candidate parameter; and
if the judging result is that the parameter test does not meet the reduction condition, continuously executing the parameter test of the candidate parameter to obtain the test result of the candidate parameter.

20. A data processing method, comprising:
receiving a judging request for judging whether a parameter test of a target function on the candidate parameter meets a reduction condition or not initiated by a computing device, wherein the target function is determined when the computing device is in response to a parameter optimization request; and
judging whether the parameter test meets the reduction condition or not in response to the judging request, wherein
the parameter test of the candidate parameter is stopped when the reduction condition is met; and the parameter test of the candidate parameter is continuously executed when the reduction condition is not met so as to obtain a test result of the candidate parameter.

21. A data processing device, comprising:
a first response module, configured to determine a target function corresponding to a parameter optimization request in response to the parameter optimization request;
a result obtaining module, configured to call a test reduction module in a process of performing a parameter test on any candidate parameter by the target function to judge whether a parameter test meets a reduction condition or not and to obtain a judging result;
a first processing module, configured to stop the parameter test of the candidate parameter if the judging result is that the parameter test meets the reduction condition; and
a second processing module, configured to continuously execute the parameter test of the candidate parameter to obtain the test result of the candidate parameter if the judging result is that the parameter test does not meet the reduction condition.

22. A data processing device, comprising:
a request receiving module, configured to receive a judging request for judging whether a parameter test of a target function on any candidate parameter meets a reduction condition or not initiated by a computing device, wherein the target function is determined when the computing device is in response to a parameter optimization request; and
a second response module, configured to judge whether the parameter test meets the reduction condition or not in response to the judging request, wherein
the parameter test of the candidate parameter is stopped when the reduction condition is met; and the parameter test of the candidate parameter is continuously executed when the reduction condition is not met so as to obtain a test result of the candidate parameter.

23. A computing device, comprising: a storage assembly and a processing assembly, wherein the storage assembly is configured to store one or more computer instructions, and the one or more computer instructions are called by the processing assembly to execute the method according to any one of claims 1 to 18.

24. A test reduction device, comprising: a storage assembly and a processing assembly, wherein the storage assembly is configured to store one or more computer instructions, and the one or more computer instructions are called by the processing assembly to execute the method according to claim 20.
